# EUROPEAN PATENT APPLICATION

(11) **EP 4 727 205 A1**
(43) Date of publication of application: **15.04.2026**
(21) Application number: 24840079.8
(22) Date of filing: 10.07.2024
(51) Int. Cl.: H04W 24/10, H04W 76/27, H04W 76/34, H04W 76/40

(54) **METHOD AND APPARATUS FOR AUTONOMOUSLY ERASING QOE-RELATED INFORMATION STORED BY TERMINAL IN NEXT GENERATION MOBILE COMMUNICATION SYSTEM**

(30) Priority: 10.07.2023 KR 20230088859
(71) Applicant: Samsung Electronics Co., Ltd., Suwon-si, Gyeonggi-do 16677 (KR)
(72) Inventor: JUNG, Sangyeob, Suwon-si, Gyeonggi-do 16677 (KR); JEONG, Seungbeom, Suwon-si, Gyeonggi-do 16677 (KR)
(74) Representative: Gulde & Partner
(86) International application number: PCT/KR2024/009832
(87) International publication number: WO 2025/014269

(57) **Abstract**

The present disclosure relates to a 5G or 6G communication system for supporting a higher data transmission rate. Disclosed in the present invention are a method and apparatus by which a terminal can automatically release QoE measurement setting information or a QoE measurement result and a report therefor, as a memory space is limited. The present disclosure discloses a method and apparatus for supporting release of QoE-related information stored by a terminal.

## Description

### [Technical Field]

The disclosure relates to a method and apparatus that enable a terminal to release stored quality-of-experience (QoE) related information.

### [Background Art]

Fifth generation (5G) mobile communication technology defines a wide frequency band to enable fast transmission speed and new services, and can be implemented not only in a sub-6 GHz frequency band ("sub 6 GHz") such as 3.5 GHz but also in an ultra-high frequency band ("above 6 GHz") called mmWave such as 28 GHz or 39 GHz. In addition, 6G mobile communication technology called "beyond 5G system" is being considered for implementation in a terahertz (THz) band (e.g., band of 95 GHz to 3 THz) to achieve transmission speed that is 50 times faster and ultra-low latency that is reduced to 1/10 compared with 5G mobile communication technology.

In the early days of 5G mobile communication technology, to meet service support and performance requirements for enhanced mobile broadband (eMBB), ultra-reliable and low-latency communication (URLLC), and massive machine-type communications (mMTC), standardization has been carried out regarding beamforming for mitigating the pathloss of radio waves and increasing the propagation distance thereof in the mmWave band, massive MIMO, support of various numerology for efficient use of ultra-high frequency resources (e.g., operating multiple subcarrier spacings), dynamic operations on slot formats, initial access schemes to support multi-beam transmission and broadband, definition and operation of bandwidth parts (BWP), new channel coding schemes such as low density parity check (LDPC) codes for large-capacity data transmission and polar codes for reliable transmission of control information, L2 pre-processing, and network slicing for providing a dedicated network specialized for a specific service.

Currently, discussions are underway to improve 5G mobile communication technology and enhance performance thereof in consideration of the services that the 5G mobile communication technology has initially intended to support, and physical layer standardization is in progress for technologies such as V2X (Vehicle-to-Everything) that aims to help a self-driving vehicle to make driving decisions based on its own location and status information transmitted by vehicles and to increase user convenience, new radio unlicensed (NR-U) for the purpose of system operation that meets various regulatory requirements in unlicensed bands, low power consumption scheme for NR terminals (UE power saving), non-terrestrial network (NTN) as direct terminal-satellite communication to secure coverage in an area where communication with a terrestrial network is not possible, and positioning.

In addition, standardization in radio interface architecture/protocol is in progress for technologies such as intelligent factories (industrial Internet of things, IIoT) for new service support through linkage and convergence with other industries, integrated access and backhaul (IAB) that provides nodes for network service area extension by integrating and supporting wireless backhaul links and access links, mobility enhancement including conditional handover and dual active protocol stack (DAPS) handover, 2-step random access (2-step RACH for NR) that simplifies the random access procedure; and standardization in system architecture/service is also in progress for the 5G baseline architecture (e.g., service based architecture, service based interface) for integrating network functions virtualization (NFV) and software defined networking (SDN) technologies, and mobile edge computing (MEC) where the terminal receives a service based on its position.

When such a 5G mobile communication system is commercialized, connected devices whose number is explosively increasing will be connected to the communication networks; accordingly, it is expected that enhancement in function and performance of the 5G mobile communication system and the integrated operation of the connected devices will be required. To this end, new research will be conducted regarding 5G performance improvement and complexity reduction, AI service support, metaverse service support, and drone communication by utilizing extended reality (XR) for efficiently supporting augmented reality (AR), virtual reality (VR), and mixed reality (MR), artificial intelligence (AI), and machine learning (ML).

Further, such advancement of 5G mobile communication systems will be the basis for the development of technologies such as new waveforms for ensuring coverage in the terahertz band of 6G mobile communication technology, full dimensional MIMO (FD-MIMO), multi-antenna transmission such as array antenna or large scale antenna, metamaterial-based lenses and antennas for improved coverage of terahertz band signals, high-dimensional spatial multiplexing using orbital angular momentum (OAM), reconfigurable intelligent surface (RIS) technique, full duplex technique to improve frequency efficiency and system network of 6G mobile communication technology, satellites, AI-based communication that utilizes artificial intelligence (AI) from the design stage and internalizes end-to-end AI support functions to realize system optimization, and next-generation distributed computing that realizes services whose complexity exceeds the limit of terminal computing capabilities by utilizing ultra-high-performance communication and computing resources.

Meanwhile, multicast/broadcast service (MBS) may be supported for terminals, and the OAM or base station may configure QoE measurements to the terminals for MBS services. Each terminal may perform QoE measurements based on the configuration information set for QoE measurements and store QoE measurement results in the memory.

### [Disclosure of Invention]

### [Technical Problem]

An object of the disclosure is to provide a method and apparatus by which a terminal can autonomously release QoE measurement configuration information or QoE measurement results and reports thereon as the memory space is limited.

### [Solution to Problem]

In a method performed by a terminal in a wireless communication system according to an example of the disclosure for solving the above-described problem, the method may include: receiving, from a base station, a first radio resource control (RRC) message including configuration information for application layer measurement applied to an RRC idle state or RRC inactive state; receiving a second RRC message indicating RRC connection release from the base station; transitioning to the RRC idle state based on the second RRC message; storing a report for quality-of-experience (QoE) measurement performed in the RRC idle state according to a QoE measurement configuration based on the configuration information; and discarding information related to the QoE measurement based on a satisfaction of a preset condition, wherein the preset condition may include a case where 48 hours have elapsed from the transition to the RRC idle state.

In addition, a terminal in a wireless communication system according to an example of the disclosure may include a transceiver; and a processor configured to: receive, from a base station, a first radio resource control (RRC) message including configuration information for application layer measurement applied to an RRC idle state or RRC inactive state; receive a second RRC message indicating RRC connection release from the base station; transition to the RRC idle state based on the second RRC message; store a report for quality-of-experience (QoE) measurement performed in the RRC idle state according to a QoE measurement configuration based on the configuration information; and discard information related to the QoE measurement based on a satisfaction of a preset condition, wherein the preset condition may include a case where 48 hours have elapsed from the transition to the RRC idle state.

### [Advantageous Effects of Invention]

According to an example of the disclosure, the terminal may be allowed to release QoE measurement-related information on its own, and the terminal may release QoE measurement-related information when a preset condition is satisfied without a separate indication from the base station, thereby securing memory space.

### [Brief Description of Drawings]

FIG. 1 is a diagram illustrating the architecture of an LTE system according to an embodiment of the disclosure.
FIG. 2 is a diagram illustrating the structure of radio protocols in the LTE system according to an embodiment of the disclosure.
FIG. 3 is a diagram illustrating the architecture of a next-generation mobile communication system according to an embodiment of the disclosure.
FIG. 4 is a diagram illustrating the structure of radio protocols in the next-generation mobile communication system according to an embodiment of the disclosure.
FIG. 5 is a flow diagram illustrating a procedure for configuring/reporting signaling-based QoE measurement in the disclosure.
FIG. 6 is a flow diagram illustrating a procedure for configuring/reporting management-based QoE measurement in the disclosure.
FIG. 7 is an embodiment illustrating a transmission and reception procedure performed between a base station and a UE to support MBS broadcasting in NR.
FIG. 8 is a diagram depicting an idea of activating or deactivating QoE measurement or reporting per MBS session.
FIG. 9 illustrates a flow diagram in which a UE in RRC idle mode (RRC_IDLE) or RRC inactive mode (RRC_INACTIVE) autonomously releases QoE configuration information and corresponding QoE measurement results.
FIG. 10 illustrates a flow diagram in which a UE in RRC idle mode (RRC_IDLE) or RRC inactive mode (RRC_INACTIVE) autonomously releases QoE configuration information and corresponding QoE measurement results.
FIG. 11 illustrates a flow diagram in which a UE in RRC idle mode (RRC_IDLE) or RRC inactive mode (RRC_INACTIVE) autonomously releases QoE configuration information and corresponding QoE measurement results.
FIG. 12 illustrates a flow diagram in which a UE in RRC idle mode (RRC_IDLE) or RRC inactive mode (RRC_INACTIVE) autonomously releases QoE configuration information and corresponding QoE measurement results.
FIG. 13 illustrates a flow diagram in which a UE in RRC idle mode (RRC_IDLE) or RRC inactive mode (RRC_INACTIVE) autonomously releases QoE configuration information and corresponding QoE measurement results.
FIG. 14 illustrates a flowchart in which a UE autonomously releases QoE configuration information and corresponding QoE measurement results.
FIG. 15 is a block diagram illustrating the internal structure of a UE according to an embodiment of the disclosure.
FIG. 16 is a block diagram illustrating the structure of an NR base station according to an embodiment of the disclosure.

### [Mode for the Invention]

Hereinafter, the operating principle of the disclosure will be described in detail with reference to the accompanying drawings. In explaining the disclosure below, descriptions of well-known functions and structures incorporated herein may be omitted to avoid obscuring the subject matter of the disclosure. The terms described below are defined in consideration of their functions in the disclosure, and these may vary depending on the intention of the user, the operator, or the custom. Hence, their meanings should be determined based on the overall contents of this specification.

In the following description of the disclosure, detailed descriptions of well-known functions or configurations will be omitted if they are deemed to unnecessarily obscure the subject matter of the disclosure. Hereinafter, embodiments of the disclosure will be described with reference to the attached drawings.

Those terms used in the following description for identifying an access node, indicating a network entity, indicating a message, indicating an interface between network entities, and indicating various identification information are taken as illustration for ease of description. Accordingly, the disclosure is not limited by the terms to be described later, and other terms referring to objects having an equivalent technical meaning may be used.

For convenience of explanation, the disclosure uses terms and names defined in the 3GPP LTE (3rd Generation Partnership Project Long Term Evolution) standards. However, the disclosure is not limited by the above terms and names, and can be equally applied to systems conforming to other standards. In the disclosure, the term "eNB" may be used interchangeably with "gNB" for convenience of explanation. That is, a base station described as an eNB may represent a gNB.

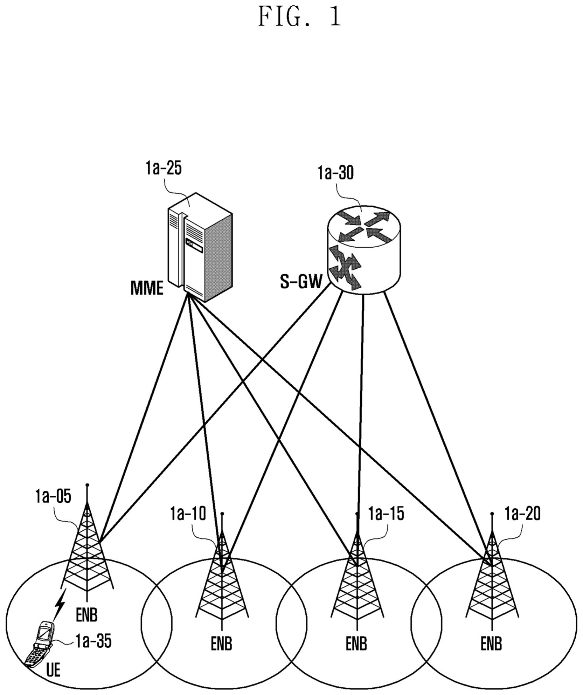

FIG. 1 is a diagram illustrating the architecture of an LTE system according to an embodiment of the disclosure.

With reference to FIG. 1, as illustrated, the radio access network of a long term evolution (LTE) system is composed of evolved node Bs (hereinafter, referred to as "ENBs," "node Bs," or "base stations") 1a-05, 1a-10, 1a-15 and 1a-20, a mobility management entity (MME) 1a-25, and a serving-gateway (S-GW) 1a-30. A user equipment (hereinafter, referred to as "UE" or "terminal") 1a-35 connects to an external network through the ENBs 1a-05, 1a-10, 1a-15 and 1a-20 and the S-GW 1a-30.

In FIG. 1, the ENBs 1a-05, 1a-10, 1a-15 and 1a-20 correspond to existing node Bs of a universal mobile telecommunications system (UMTS). The ENB is connected to the UE 1a-35 through a radio channel, and plays a more complicated role than that of the existing node B. In the LTE system, since all user traffic including real-time services such as voice over IP (VoIP) are serviced through shared channels, devices performing scheduling through collection of state information, such as a buffer state, an available transmission power state, and a channel state of each UE, are necessary, and the ENBs 1a-05, 1a-10, 1a-15 and 1a-20 correspond to such scheduling devices. In general, one ENB controls a plurality of cells. For example, to achieve a transmission speed of 100 Mbps, the LTE system uses orthogonal frequency division multiplexing (OFDM) in a bandwidth of 20 MHz as a radio access technology. Further, the LTE system adopts an adaptive modulation and coding (AMC) scheme that determines a modulation scheme and a channel coding rate to match the channel state of the UE.

The S-GW 1a-30 is a device that provides a data bearer, and generates or removes a data bearer under the control of the MME 1a-25.

The MME is a device that takes charge of not only mobility management of the UE but also various kinds of control functions, and is connected to a plurality of base stations.

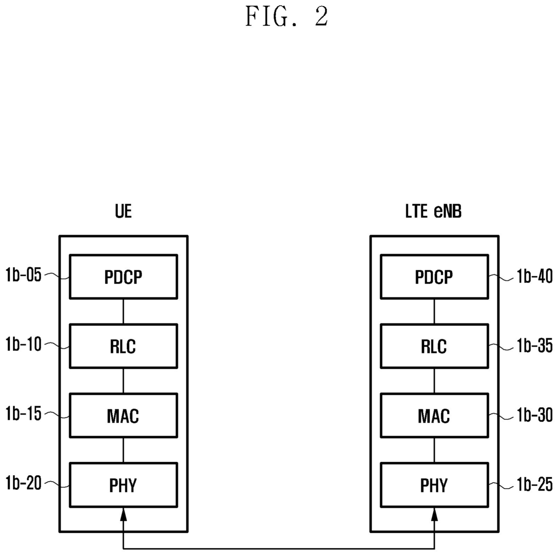

FIG. 2 is a diagram illustrating the structure of radio protocols in the LTE system according to an embodiment of the disclosure.

With reference to FIG. 2, in a UE or an ENB, the radio protocol of an LTE system is composed of packet data convergence protocol (PDCP) 1b-05 or 1b-40, radio link control (RLC) 1b-10 or 1b-35, and medium access control (MAC) 1b-15 or 1b-30. The PDCP (packet data convergence protocol) 1b-05 or 1b-40 takes charge of IP header compression/decompression operations. The main functions of the PDCP are summarized as follows.
- Header compression and decompression (ROHC only)
- Transfer of user data
- In-sequence delivery (in-sequence delivery of upper layer PDUs at PDCP re-establishment procedure for RLC AM)
- Sequence reordering (for split bearers in DC (only support for RLC AM): PDCP PDU routing for transmission and PDCP PDU reordering for reception)
- Duplicate detection (duplicate detection of lower layer SDUs at PDCP re-establishment procedure for RLC AM)
- Retransmission (retransmission of PDCP SDUs at handover and, for split bearers in DC, of PDCP PDUs at PDCP data-recovery procedure, for RLC AM)
- Ciphering and deciphering
- Timer-based SDU discard in uplink

The radio link control (hereinafter, referred to as "RLC") 1b-10 or 1b-35 reconfigures PDCP protocol data units (PDUs) to a proper size and performs an automatic repeat request (ARQ) operation. The main functions of the RLC are summarized as follows.
- Transfer of upper layer PDUs
- ARQ (error correction through ARQ (only for AM data transfer))
- Concatenation, segmentation and reassembly of RLC SDUs (only for UM and AM data transfer)
- Re-segmentation of RLC data PDUs (only for AM data transfer)
- Sequence reordering (reordering of RLC data PDUs (only for UM and AM data transfer)
- Duplicate detection (only for UM and AM data transfer)
- Error detection (protocol error detection (only for AM data transfer))
- RLC SDU discard (only for UM and AM data transfer)
- RLC re-establishment

The MAC 1b-15 or 1b-30 is connected to several RLC layer entities configured in one UE, and performs multiplexing/demultiplexing of RLC PDUs into/from MAC PDUs. The main functions of the MAC are summarized as follows.
- Mapping (mapping between logical channels and transport channels)
- Multiplexing and demultiplexing (multiplexing/demultiplexing of MAC SDUs belonging to one or different logical channels into/from transport blocks (TB) delivered to/from the physical layer on transport channels)
- Scheduling information reporting
- HARQ (error correction through HARQ)
- Priority handling between logical channels of one UE
- Priority handling between UEs by means of dynamic scheduling
- MBMS service identification
- Transport format selection
- Padding

The physical layer 1b-20 or 1b-25 composes OFDM symbols from higher layer data through channel coding and modulation and transmits them through a radio channel, or recovers OFDM symbols received over a radio channel through demodulation and channel decoding and forwards them to the higher layer.

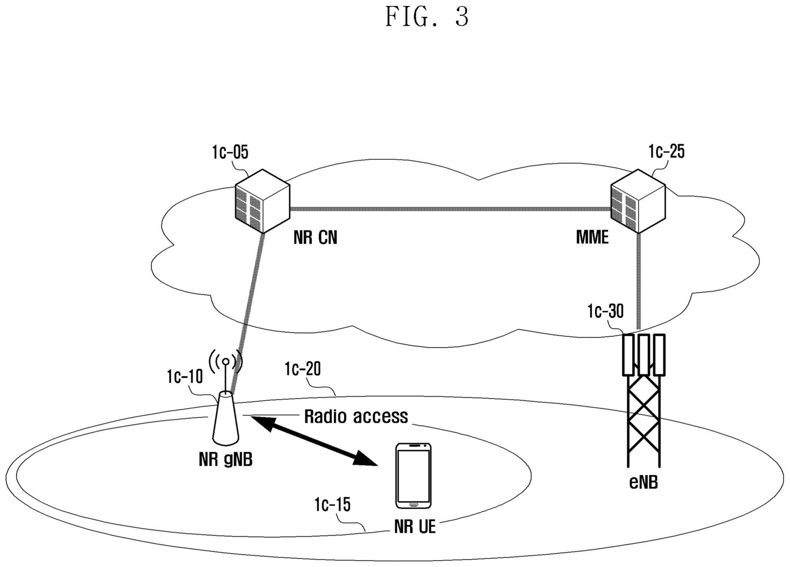

FIG. 3 is a diagram illustrating the architecture of a next-generation mobile communication system according to an embodiment of the disclosure.

With reference to FIG. 3, as illustrated, the radio access network of a next-generation mobile communication system (hereinafter, referred to as "NR" or "2g") is composed of a new radio node B (hereinafter, referred to as "NR gNB" or "NR base station") 1c-10 and a new radio core network (NR CN) 1c-05. A user equipment (hereinafter, referred to as "NR UE" or "terminal") 1c-15 connects to an external network through the NR gNB 1c-10 and the NR CN 1c-05.

In FIG. 3, the NR gNB 1c-10 corresponds to an evolved node B (ENB) of the existing LTE system. The NR gNB is connected to the NR UE 1c-15 through a radio channel, and it can provide a more superior service than that of the existing node B. Since all user traffic are serviced through shared channels in the next-generation mobile communication system, a device that performs scheduling through collection of status information, such as a buffer state, an available transmission power state, and a channel state of each UE, is necessary, and the NR gNB 1c-10 takes charge of this. One NR gNB generally controls a plurality of cells. To implement ultra-high-speed data transmission compared with the existing LTE, a bandwidth beyond the existing maximum bandwidth may be utilized, and a beamforming technology may be added to orthogonal frequency division multiplexing (OFDM) being used as a radio access technology. Further, an adaptive modulation and coding (AMC) scheme determining a modulation scheme and a channel coding rate to match the channel state of the UE is adopted.

The NR CN 1c-05 performs functions such as mobility support, bearer configuration, and quality of service (QoS) configuration. The NR CN is a device taking charge of not only UE mobility management but also various kinds of control functions, and is connected to a plurality of base stations. Further, the next-generation mobile communication system may also interwork with the existing LTE system, and the NR CN is connected to an MME 1c-25 through a network interface. The MME is connected to an eNB 1c-30 being an existing base station.

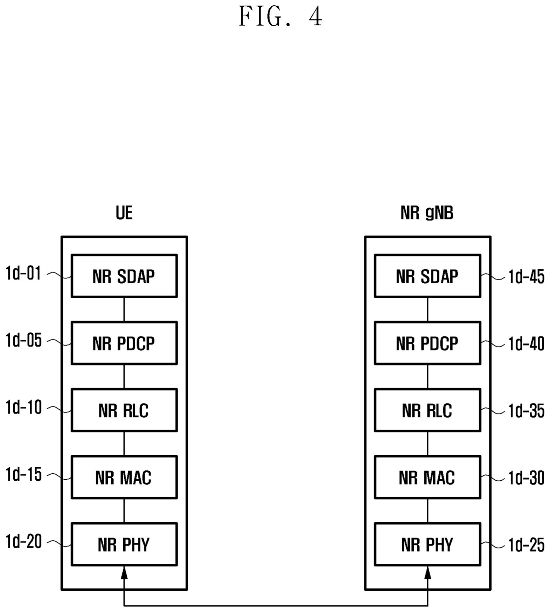

FIG. 4 is a diagram illustrating the structure of radio protocols in a next-generation mobile communication system according to an embodiment of the disclosure.

FIG. 4 is a diagram illustrating the radio protocol structure of the next-generation mobile communication system, to which the disclosure may be applied.

With reference to FIG. 4, in a UE or an NR gNB, the radio protocol of the next-generation mobile communication system is composed of NR service data adaptation protocol (SDAP) 1d-01 or 1d-45, NR PDCP 1d-05 or 1d-40, NR RLC 1d-10 or 1d-35, and NR MAC 1d-15 or 1d-30.

Main functions of the NR SDAP 1d-01 or 1d-45 may include some of the following functions.
Transfer of user plane data
Mapping between a QoS flow and a DRB for both DL and UL
Marking QoS flow ID in both DL and UL packets
Reflective QoS flow to DRB mapping for UL SDAP PDUs

With respect to the SDAP entity, the UE may be configured with, through a RRC (radio resource control) message, whether to use a header of the SDAP entity or whether to use a function of the SDAP entity for each PDCP entity, bearer, or logical channel. If a SDAP header is configured, a NAS (non-access stratum) reflective QoS 1-bit indication and AS (access stratum) reflective QoS 1-bit indication of the SDAP header may be used to instruct the UE to update or reconfigure the mapping information between QoS flows and data bearers for the uplink and downlink. The SDAP header may include QoS flow ID information indicating the QoS. The QoS information may be used as data processing priority and scheduling information for supporting smooth services.

Main functions of the NR PDCP 1d-05 or 1d-40 may include some of the following functions.
- Header compression and decompression (ROHC only)
- Transfer of user data
- In-sequence delivery of upper layer PDUs
- Out-of-sequence delivery of upper layer PDUs
- PDCP PDU reordering for reception
- Duplicate detection of lower layer SDUs
- Retransmission of PDCP SDUs
- Ciphering and deciphering
- Timer-based SDU discard in downlink

In the above description, the reordering function of the NR PDCP entity may mean reordering of PDCP PDUs received from a lower layer in order based on the PDCP sequence number (SN), and it may include delivering data to an upper layer in reordered sequence, may include directly delivering data without considering the order, may include recording lost PDCP PDUs through reordering, may include reporting the status of lost PDCP PDUs to the transmitting side, or may include requesting retransmission of the lost PDCP PDUs.

Main functions of the NR RLC 1d-10 or 1d-35 may include some of the following functions.
- Data transfer (transfer of upper layer PDUs)
- In-sequence delivery (in-sequence delivery of upper layer PDUs)
- Out-of-sequence delivery (out-of-sequence delivery of upper layer PDUs)
- Error correction through ARQ
- Concatenation, segmentation and reassembly of RLC SDUs
- Re-segmentation of RLC data PDUs
- Reordering of RLC data PDUs
- Duplicate detection
- Protocol error detection
- RLC SDU discard
- RLC re-establishment

In the above description, in-sequence delivery of the NR RLC entity may mean in-sequence delivery of RLC SDUs (service data units) received from a lower layer to an upper layer. In-sequence delivery of the NR RLC entity may include reassembly and delivery of RLC SDUs when several RLC SDUs belonging to one original RLC SDU are received after segmentation, may include reordering of received RLC PDUs based on the RLC sequence number (SN) or the PDCP SN, may include recording lost RLC PDUs through reordering, may include reporting the status of the lost RLC PDUs to the transmitting side, may include requesting retransmission of the lost RLC PDUs, may include, if there is a lost RLC SDU, in-sequence delivery of only RLC SDUs before the lost RLC SDU to an upper layer, may include, although there is a lost RLC SDU if a specified timer has expired, in-sequence delivery of all the RLC SDUs received before the starting of the timer to an upper layer, or may include, although there is a lost RLC SDU if a specified timer has expired, in-sequence delivery of all the RLC SDUs received up to now to an upper layer. The NR RLC entity may process RLC PDUs in the order of reception (in order of arrival regardless of the order of the sequence number), and transfer them to the NR PDCP entity in an out-of-sequence delivery manner. Or, in the case of receiving a segment, the NR RLC entity may reconstruct one whole RLC PDU from segments stored in the buffer or received later, and transfer it to the NR PDCP entity. The NR RLC layer may not include a concatenation function, which may be performed by the NR MAC layer or may be replaced with a multiplexing function of the NR MAC layer.

In the above description, out-of-sequence delivery of the NR RLC entity may mean a function of transferring RLC SDUs received from a lower layer directly to a higher layer regardless of their order, and may include, if several RLC SDUs belonging to one original RLC SDU are received after segmentation, reassembly and delivery of the RLC SDUs, and may include storing the RLC SNs or PDCP SNs of received RLC PDUs and ordering them to record lost RLC PDUs.

The NR MAC 1d-15 or 1d-30 may be connected to several NR RLC entities configured in one UE, and main functions of the NR MAC may include some of the following functions.
- Mapping between logical channels and transport channels
- Multiplexing and demultiplexing of MAC SDUs
- Scheduling information reporting
- Error correction through HARQ
- Priority handling between logical channels of one UE
- Priority handling between UEs by means of dynamic scheduling
- MBMS service identification
- Transport format selection
- Padding

The NR PHY 1d-20 or 1d-25 may compose OFDM symbols from higher layer data through channel coding and modulation and transmit them through a radio channel, or may demodulate and channel-decode OFDM symbols received through a radio channel and forward the result to a higher layer.

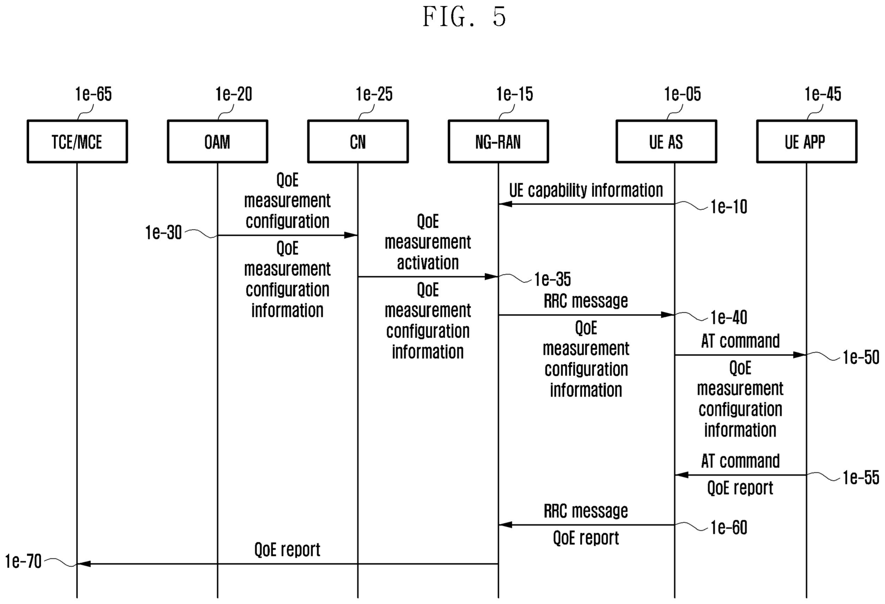

FIG. 5 is a flow diagram illustrating a procedure for configuring/reporting signaling-based QoE measurement in the disclosure.

With reference to FIG. 5, the UE access stratum (AS) 1e-05 of the UE may include information indicating the quality-of-experience (QoE) measurements supported by application layer measurements in a UE capability information message (UECapabilityInformation), and transmit it to the base station 1e-15 (1e-10). Additionally, the UE capability information message may also include capability information regarding whether the UE AS 1e-05 supports RRC segmentation of the RRC message reporting QoE measurement results (MeasurementReportAppLayer message), which is to be transmitted to the base station 1e-10. For example, various parameters may be included in the UE capability information message as shown in Table 1 below.

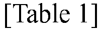

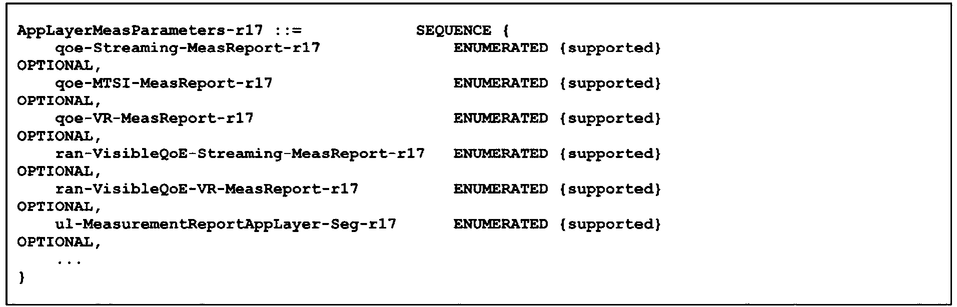

In addition, the UE capability information message may further include information indicating whether the UE supports QoE measurement through application layer measurements for multimedia broadcast multicast services (MBMS) and extended reality (XR). Here, in the UE capability information message, information indicating whether QoE measurement is supported may be included separately for multimedia broadcast services and multimedia multicast services, or may be included commonly to multimedia broadcast services and multimedia multicast services. Additionally, information indicating whether QoE measurement is supported depending on the RRC connection setup state for multimedia broadcast services may be additionally included in the UE capability information message. For example, the UE may support QoE measurement for multimedia broadcast services only in RRC connected mode (RRC_CONNECTED) or only in RRC idle mode (RRC_IDLE) and RRC inactive mode (RRC_INACTIVE), or may support QoE measurement for multimedia broadcast services regardless of the RRC connection state. Additionally, the UE capability information message may include capability information that allows the UE AS 1e-05 to autonomously release stored QoE configuration information and corresponding QoE measurement results after a preset period of time (e.g., 48 hours). Here, the capability information related to autonomous release may refer to capability information indicating that the UE can voluntarily erase QoE configuration information and corresponding QoE measurement results for multimedia broadcast services, for example, in RRC idle mode or RRC inactive mode if the base station does not collect them even after a specific period of time. In the above description, multimedia broadcast services are exemplified for convenience of explanation without being limited thereto, and the examples of UE capability information described above may also be applied when indicating UE capabilities for other services.

Meanwhile, at step 1e-30, operations administration and maintenance (OAM) 1e-20 may provide QoE measurement configuration information to the core network (CN) 1e-25.

At step 1e-35, the CN 1e-25 may activate QoE measurement by transmitting the QoE measurement configuration information received at step 1e-30 to the base station 1e-15.

At step 1e-40, the base station 1e-15 may include the QoE measurement configuration information received at step 1e-35 in a specific RRC message (e.g., RRCReconfiguration or RRCResume) and transmit it to the UE AS 1e-05. The QoE measurement configuration information (AppLayerMeasConfig) contained in the above RRC message may include various parameters as shown in Table 2 below.

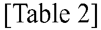

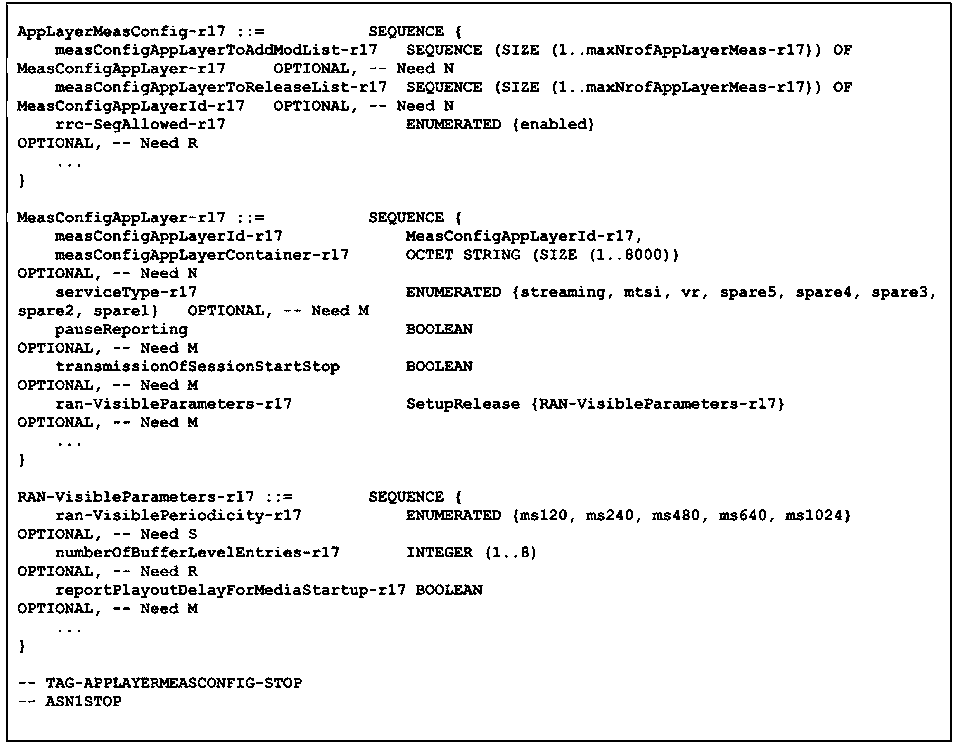

For Table 2, the description of the parameters included in the RRC message is as shown in Table 3 and Table 4 below.

**[Table 3]**

| ***AppLayerMeasConfig* field descriptions** |
|---|
| ***measConfigAppLayerContainer*** |
| The field contains configuration of application layer measurements, see Annex L (normative) in TS 26.247 [68], clause 16.5 in TS 26.114 [69] and TS 26.118 [70]. |
| ***pauseReporting*** |
| The field indicates whether the transmission of *measReportAppLayerContainer* is paused or not. |
| ***ran-VisibleParameters*** |
| The field indicates whether RAN visible application layer measurements shall be reported or not. The field is optionally present when *service Type* is set to *streaming or vr.* Otherwise, it is absent. |
| ***rrc-SegAllowed*** |
| This field indicates that RRC segmentation of *MeasurementReportAppLayer* is allowed. It may be present only if the UE supports RRC segmentation of the *MeasurementReportAppLaver* message in UL. |
| ***serviceType*** |
| Indicates the type of application layer measurement. Value streaming indicates Quality of Experience Measurement Collection for streaming services (see TS 26.247 [68]), value mtsi indicates Quality of Experience Measurement Collection for MTSI (see TS 26.114 [69]). value vr indicates Quality of Experience Measurement Collection for VR service (see TS 26.118 [70]). The network always configures *serviceType* when application layer measurements are initially configured and at *fullConfig.* |
| ***transmissionOfSessionStartStop*** |
| The field indicates whether the UE shall transmit indications when sessions in the application layer start and stop. The UE transmits a session start indication upon configuration of this field if a session already has started in the application layer. |

**[Table 4]**

| ***RAN-VisibleParameters* field descriptions** |
|---|
| ***numberOfBufferLevelEntries*** |
| The field contains the maximum number of buffer level entries that can be reported for RAN visible application layer measurements. |
| ***ran-VisiblePeriodicity*** |
| The field indicates the periodicity of RAN visible reporting. Value ms120 indicates 120 ms, value ms240 indicates 240 ms and so on. |
| ***reportPlayoutDelayForMediaStartup*** |
| The field indicates whether the UE shall report Playout Delay for Media Startup for RAN visible application layer measurements. |

Additionally, AppLayerMeasConfig may also include QoE measurement configuration information for multimedia broadcast services. For example, "serviceType" included in AppLayerMeasConfig may indicate multimedia broadcast services, a separate indicator may be introduced to include QoE measurement configuration information for multimedia broadcast services, or an indicator (e.g., mbs-SessionList) indicating whether QoE measurement is performed may be included for each MBS session to provide the QoE measurement configuration information. The QoE measurement configuration information for multimedia broadcast services may be applied in all RRC connection setup states (RRC_IDLE, RRC_INACTIVE, RRC_CONNECTED) of the UE, or in at least one of the RRC connection setup states. That is, AppLayerMeasConfig may indicate in which RRC states (any combination of RRC_IDLE, RRC_INACTIVE, and RRC_CONNECTED) the QoE measurement configuration information for multimedia broadcast services is applied. As another example, if the base station does not collect the QoE measurement results even after a specified period of time (e.g., 48 hours), information indicating whether the UE can release them (along with the QoE configuration information) may also be set through the above message. For example, if the above information is indicated, the UE may release the QoE configuration information and corresponding QoE measurement results for multimedia broadcast services after expiration of a specific period of time according to the instruction from the base station. For reference, the UE AS having received AppLayerMeasConfig may perform the procedure described in Table 5 below.

**[Table 5]**

| | | | | |
|---|---|---|---|---|
| **1> if *measConfigAppLayerToReleaseList* is included in *appLayerMeasConfig* within *RRCReconfiguration* or *RRCResume:*** | | | | |
| | **2> for each *measConfigAppLayerId* value included in the *measConfigAppLayerToReleaseList:*** | | | |
| | | **3> forward the *measConfigAppLayerId* and inform upper layers about the release of the application layer measurement configuration including any RAN visible application layer measurement configuration;** | | |
| | | **3> discard any application layer measurement report received from upper layers;** | | |
| | | **3> consider itself not to be configured to send application layer measurement report for the *measConfigAppLayerId.*** | | |
| | | **3> if *ran-VisibleParameters* is set to setup and the parameters have been received:** | | |
| | | | **4> forward the *measConfigAppLayerId,* the *ran-VisiblePeriodicity,* if configured, the *numberOfBufferLevelEntries,* if configured, and the *reportPlayoutDelayForMediaStartup,* if configured, to upper layers considering the *serviceType;*** | |
| | | **3> else if *ran-VisibleParameters* is set to release:** | | |
| | | | **4> forward the *measConfigAppLayerId* and inform upper layers about the release of the RAN visible application layer measurement configuration;** | |
| | | **3> if *pauseReporting* is set to *true:*** | | |
| | | | **4> if at least one segment, but not all segments, of a segmented *MeasurementReportAppLayer* message containing an application layer measurement report associated with the *measConfigAppLayerId* has been submitted to lower layers for transmission:** | |
| | | | | **5> submit the remaining segments of the *MeasurementReportAppLayer* message to lower layers for transmission;** |
| | | | **4> suspend submitting application layer measurement report containers to lower layers for the application layer measurement configuration associated with the *measConfigAppLayerId;*** | |
| | | | **4> store any previously or subsequently received application layer measurement report containers associated with the *measConfigAppLayerId* for which no segment, or full message, has been submitted to lower layers for transmission;** | |
| | | **3> else if *pauseReporting* is set to *false* and if transmission of application layer measurement report containers has previously been suspended for the application layer measurement configuration associated with the *measConfigAppLayerId:*** | | |
| | | | **4> submit stored application layer measurement report containers to lower layers, if any, for the application layer measurements configuration associated with the *measConfigAppLayerId;*** | |
| | | | **4> resume submitting application layer measurement report containers to lower layers for the application layer measurement configuration associated with the *measConfigAppLayerId;*** | |
| **1> if *measConfigAppLayerToAddModList* is included in *appLayerMeasConfig* within *RRCReconfiguration* or *RRCResume:*** | | | | |
| | **2> for each *measConfigAppLayerId* value included in the *measConfigAppLayerToAddModList:*** | | | |
| | | **3> if *measConfigAppLayerContainer* is included for the corresponding *MeasConfigAppLayer* configuration:** | | |
| | | | **4> forward the *measConfigAppLayerContainer,* the *measConfigAppLayerId* and the *serviceType* to upper layers considering the *serviceType;*** | |
| | | **3> consider itself to be configured to send application layer measurement report for the *measConfigAppLayerId* in accordance with 5.7.16;** | | |
| | | **3> forward the *transmissionOfSessionStartStop,* if configured, and *measConfigAppLayerId* to upper layers considering the *serviceType;*** | | |

At step 1e-50, the UE AS 1e-05 having received AppLayerMeasConfig may forward the above configuration information to the UE application layer (UE APP) 1e-45 via an AT command.

At step 1e-55, the UE APP 1e-45 may perform QoE measurement according to the configuration information received at step 1e-50, and report the measurement results to the UE AS 1e-05 via an AT command according to the configuration information.

At step 1e-60, the UE AS 1e-05 may report the measurement results to the base station 1e-15 via a specific RRC message (e.g., MeasReportAppLayer) on the basis of the information received at step 1e-55. Here, signaling radio bearer (SRB) 4 may be used to report QoE measurement results. In addition, the above RRC message may include various parameters as shown in Table 6 below.

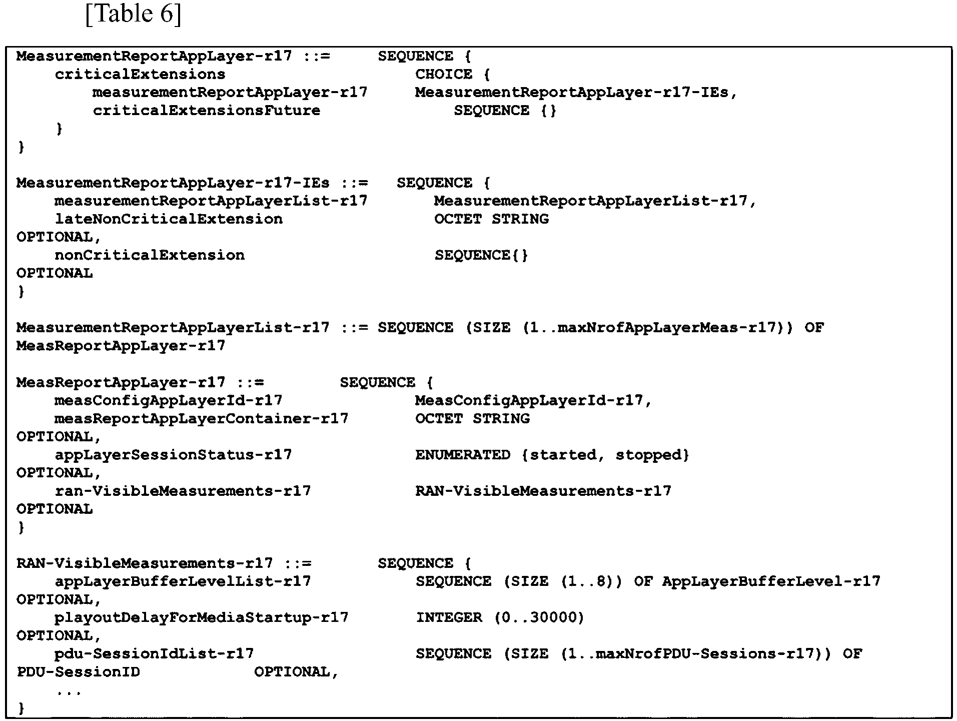

For example, the operation of the UE AS 1e-05 to transmit a specific RRC message including a QoE measurement result report to the base station 1e-15 may be performed according to the procedure in Table 7 below.

**[Table 7]**

| | | | |
|---|---|---|---|
| **1> for each *measConfigAppLayerId:*** | | | |
| | **2> if the UE AS has received application layer measurement report from upper layers which has not been transmitted; and** | | |
| | **2> if the application layer measurement reporting has not been suspended for the *measConfigAppLayerId* associated with the application layer measurement report according to clause 5.3.5.13d:** | | |
| | | **3> set the *measReportAppLayerContainer* in the *MeasurementReportAppLayer* message to the received value in the application layer measurement report;** | |
| | **2> set the *measConfigAppLayerId* in the *MeasurementReportAppLayer* message to the value of the *measConfigAppLayerld* received together with application layer measurement report information;** | | |
| | **2> if session start or stop information has been received from upper layers for the *measConfigAppLayerId:*** | | |
| | | **3> set the *appLayerSessionStatus* to the received value of the application layer measurement information;** | |
| | **2> if RAN visible application layer measurement report has been received from upper layers:** | | |
| | | **3> for each *appLayerBufferLevel* value in the received RAN visible application layer measurement report:** | |
| | | | **4> set the *appLayerBufferLevel* values in the *appLayerBufferLevelList* to the buffer level values received from the upper layer in the order with the first *appLayerBufferLevel* value set to the newest received buffer level value, the second *appLayerBufferLevel* value set to the second newest received buffer level value, and so on until all the buffer level values received from the upper layer have been assigned or the maximum number of values have been set according to *appLayerBufferLevel,* if configured;** |
| | | **3> set the *playoutDelayForMediaStartup* to the received value in the RAN visible application layer measurement report, if any;** | |
| | | **3> for each PDU session ID value indicated in the received RAN visible application layer measurement report, if any:** | |
| | | | **4> set the *PDU-SessionID* field in the *pdu-SessionIdList* to the indicated PDU session ID value;** |
| | **2> if the encoded RRC message is larger than the maximum supported size of one PDCP SDU specified in TS 38.323 [5]:** | | |
| | | **3> if the RRC message segmentation is enabled based on the field *rrc-SegAllowed* received in *appLayerMeasConfig:*** | |
| | | | **4> initiate the UL message segment transfer procedure as specified in clause 5.7.7;** |
| | | **3> else:** | |
| | | | **4> discard the RRC message;** |
| | **2> else:** | | |
| | | **3> submit the *MeasurementReportAppLayer* message to lower layers for transmission upon which the procedure ends.** | |

At step 1e-70, the base station 1e-15 may forward the measurement result report received at step 1e-65 to a specified final destination (trace collection entity (TCE) or measurement collection entity (MCE) 1e-65).

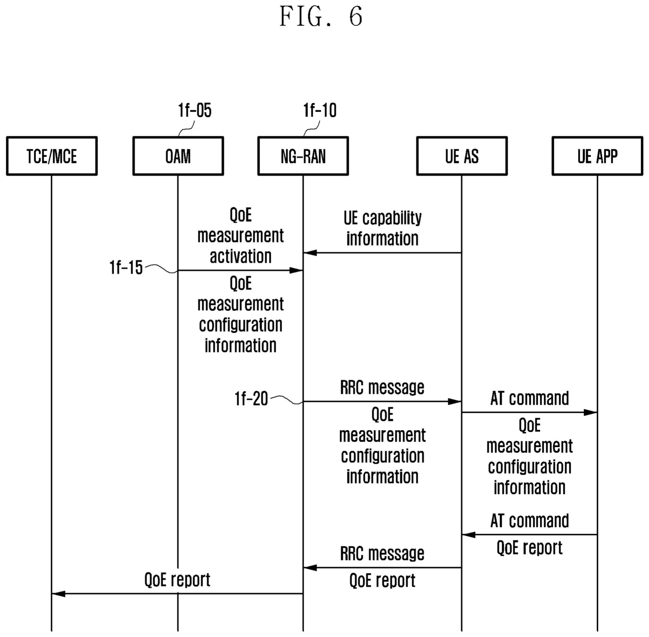

FIG. 6 is a flow diagram illustrating a procedure for configuring/reporting management-based QoE measurement in the disclosure.

The procedure for configuring/reporting management-based QoE measurements is largely similar to the signaling-based procedure described in FIG. 5. Hence, in this drawing for the procedure according to the management-based method, only the contents that are different from the signaling-based procedure described above are described, and other procedures and descriptions will be omitted as they overlap with the description regarding FIG. 5.

With reference to FIG. 6, in the management-based approach, QoE measurement may be activated (1f-15) by the OAM 1f-05 that transmits a QoE measurement configuration directly to the base station 1f-10 without going through the CN. Upon receiving this, the base station 1f-10 finds one or multiple UEs that satisfy various conditions (e.g., area scope, application layer capability, service type). The base station 1f-10 may then forward the QoE measurement configuration obtained from the OAM 1f-05 to each of the found UEs via a specific RRC message (e.g., RRCReconfiguration or RRCResume) (1f-20). The UE AS having received this may transfer the QoE measurement configuration to the UE APP to perform QoE measurement as described above in FIG. 5, and may transmit a QoE report obtained from the UE APP to the TCE/MCE via the base station 1f-10. The type of messages used in each of the other procedures or information included therein may be the same as described above in FIG. 5 (signaling-based approach).

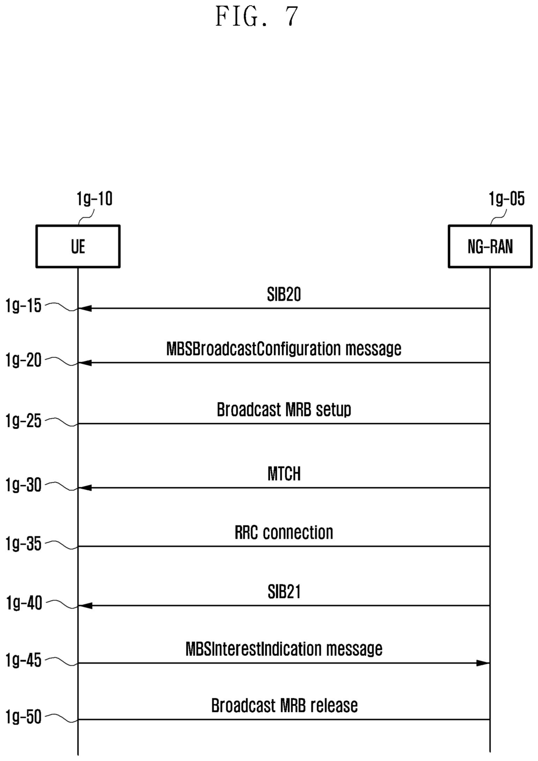

FIG. 7 is an embodiment illustrating a transmission and reception procedure performed between a base station and a UE to support MBS broadcasting in NR.

With reference to FIG. 7, a UE 1g-10 in RRC idle mode (RRC_IDLE) or RRC inactive mode (RRC_INACTIVE) may camp on a cell or base station 1g-05 that provides system information block (SIB) 20, and receive SIB 20 from the camped base station 1g-05 (1g-15). Also, a UE in connected mode (RRC_CONNECTED) may receive SIB 20. SIB 20 may include information used by the UE to obtain MBS control channel (MCCH) information required for receiving a multicast/broadcast service (MBS) broadcast. Here, the MCCH means: a point-to-multipoint downlink channel used for transmitting MBS broadcast control information associated with one or several MTCH(s) from the network to the UE.

Meanwhile, the ASN.1 format of SIBx may be as shown in Table 8 below.

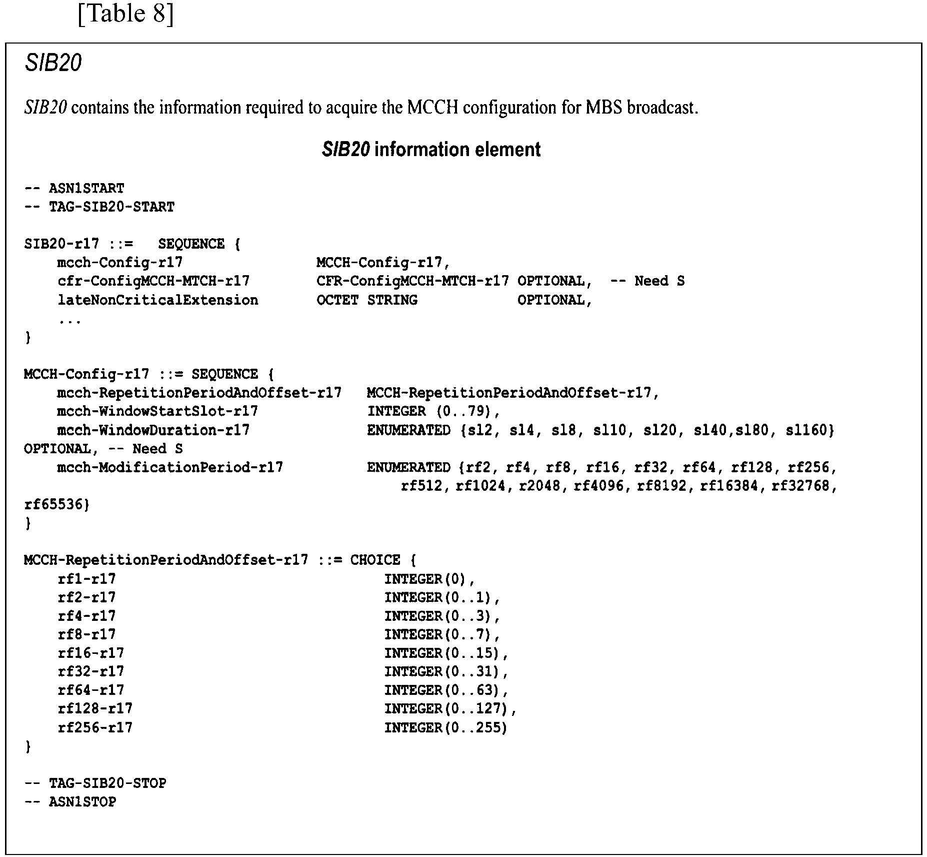

| **SIB20 field descriptions** |
|---|
| ***cfr-ConfigMCCH-MTCH*** |
| Common frequency resource used for MCCH and MTCH reception. If the field is absent, the CFR for broadcast has the same location and size as CORESET0 and PDSCH configuration of MCCH is the same as PDSCH configuration provided in *initialDownlinkBWP* in *SIB1.* |
| ***mcch-WindowDuration*** |
| Indicates, starting from the slot indicated by *mcch-WindowStartSlot,* the duration in slot during which MCCH may be scheduled. Absence of this field means that MCCH is only scheduled in the slot indicated by *mcch-WindowStartSlot.* |
| ***mcch-ModificationPeriod*** |
| Defines periodically appearing boundaries, i.e. radio frames for which SFN mod *mcch-ModificationPeriod =* 0. The contents of different transmissions of MCCH information can only be different if there is at least one such boundary in-between them. Value rf2 corresponds to two radio frames, value rf4 corresponds to four radio frames and so on. |
| ***mcch-RepetitionPeriodAndOffset*** |
| Defines the length and the offset of the MCCH repetition period. rf1 corresponds to a repetition period length of one radio frame, rf2 corresponds to a repetition period length of two radio frames and so on. The corresponding integer value indicates the offset of the repetition period in the number of radio frames. MCCH is scheduled in radio frames for which: SFN mod repetition period length = offset of the repetition period. |
| ***mcch-WindowStartSlot*** |
| Indicates the slot in which MCCH transmission window starts. |

At step 1g-20, if the MBS capable UE 1g-10 wants to receive an MBS broadcast (or is interested in MBS broadcast reception) or is receiving an MBS broadcast service, the UE may obtain an MBSBroadcastConfiguration message over the MCCH after entering the cell providing SIB 20 or receiving an update notification of MCCH information. More specifically, the operation of obtaining the MBSBroadcastConfiguration message may follow the procedure described in Table 9 below.

**[Table 9]**

| | | |
|---|---|---|
| **An MBS capable UE interested to receive or receiving an MBS broadcast service shall:** | | |
| | **1> if the procedure is triggered by an MCCH information change notification:** | |
| | | **2> start acquiring the *MBSBroadcastConfiguration* message on MCCH from the slot in which the change notification was received;** |
| | **1> if the UE enters a cell broadcasting *SIB20;* or** | |
| | **1> if the UE receives *sCellSIB20:*** | |
| | | **2> acquire the *MBSBroadcastConfiguration* message on MCCH in the concerned cell at the next repetition period.** |

For reference, the update of the MCCH information described above may be performed according to the specific procedure described in Table 10 below.

**[Table 10]**

| |
|---|
| **Change of MCCH information only occurs at specific radio frames, i.e. the concept of a modification period is used. Within a modification period, the same MCCH information may be transmitted a number of times, as defined by its scheduling (which is based on a repetition period).** |
| **When the network changes (some of) the MCCH information, it notifies the UEs about the change starting from the beginning of the MCCH modification period via PDCCH which schedules the MCCH in every repetition in that modification period.** |
| **Upon receiving a change notification, a UE receiving or interested to receive MBS services transmitted using MBS broadcast acquires the new MCCH information starting from the same slot. The UE applies the previously acquired MCCH information until the UE acquires the new MCCH information. The notification is transmitted with a 2-bit bitmap, see TS 38.212 [17] clause 7.3.1.5.1. The MSB in the 2-bit bitmap, when set to '1', indicates the start of new MBS service(s). The LSB in the 2-bit bitmap, when set to '1', indicates modification of MCCH information other than the change caused by start of new MBS service(s), e.g. modification of a configuration of an on-going MBS session(s), MBS session(s) stop or neighbouring cell information modification.** |

Additionally, the ASN.1 format of the MBSBroadcastConfiguration message described above may be as shown in Table 11 below.

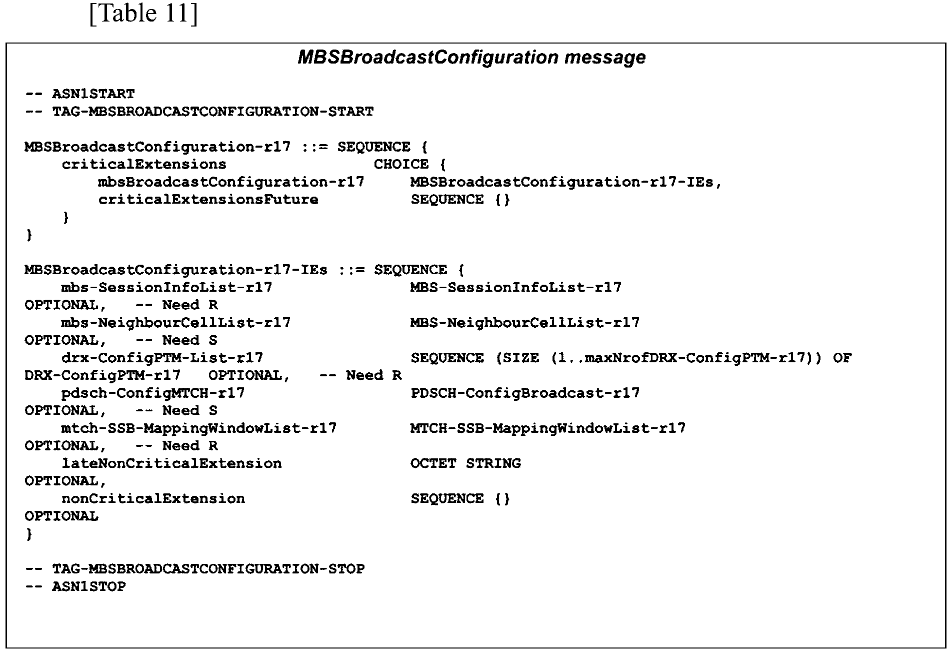

| ***MBSBroadcastConfiguration* field descriptions** |
|---|
| ***pdsch-ConfigMTCH*** |
| Provides parameters for acquiring the PDSCH for MTCH. When this field is absent, the UE shall use parameters in *pdsch-ConfigMCCH* to acquire the PDSCH for MTCH. |
| ***mbs-SessionInfoList*** |
| Provides the configuration of each MBS session provided by MBS broadcast in the current cell. |
| ***mbs-NeighbourCellList*** |
| List of neighbour cells providing MBS broadcast services via broadcast MRB. This field is used by the UE together with *mtch-NeighbourCell* field signalled for each MBS session in the corresponding *MBS-Sessioninfo.* When an empty *mbs-NeighbourCellList* list is signalled, the UE shall assume that MBS broadcast services signalled in *mbs-SessionlnfoList* in the *MBSBroadcastConfiguration* message are not provided in any neighbour cell. When the field *mbs-NeighbourCellList* is absent, the current serving cell does not provide information about MBS broadcast services in the neighbouring cells, i.e. the UE cannot determine the presence or absence of an MBS service in neighbouring cells based on the absence of this field. |

The parameter mbs-sessionInfoList included in the MBSBroadcastConfiguration message of Table 11 above may include information on multiple MBS sessions currently being serviced in the cell, and the ASN.1 format of this parameter may be as shown in Table 12 below.

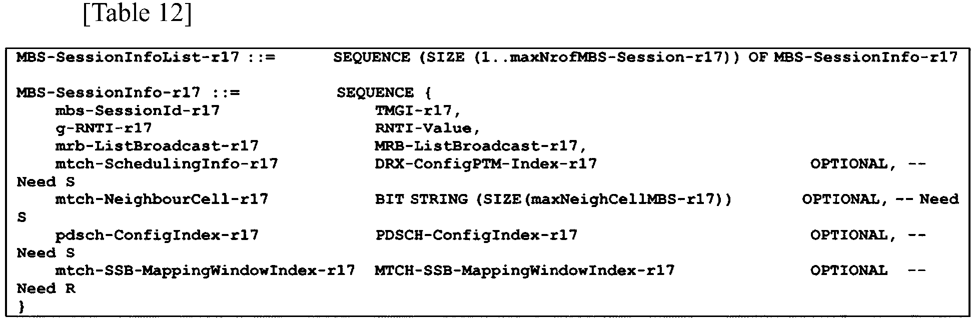

Each MBS session may be identified by an MBS session ID (MBS-SessionId) called a temporary mobile group identity (TMGI). The TMGI may be composed of an operator's public land mobile network (PLMN) ID and a service ID unique within the corresponding PLMN. The g-RNTI (group-RNTI) may refer to a radio network temporary identifier (RNTI) that scrambles multicast traffic channel (MTCH) transmission and scheduling information.

At step 1g-25, the UE 1g-10 may establish a broadcast MRB (MBS radio bearer) to receive an MBS broadcast session of interest. Broadcast MRB establishment may be initiated for the following reasons:

Upon start of the MBS session, upon entering a cell providing a MBS broadcast service UE is interested in, upon becoming interested in the MBS broadcast service, upon removal of UE capability limitations inhibiting reception of the MBS broadcast service UE is interested in.

The specific procedure for broadcast MRB establishment at step 1g-25 may be as shown in Table 13 below.

**[Table 13]**

| | | |
|---|---|---|
| **Upon a broadcast MRB establishment, the UE shall:** | | |
| | **1> establish a PDCP entity and an RLC entity in accordance with *MRB-InfoBroadcast* for this broadcast MRB included in the *MBSBroadcastConfiguration* message and the configuration specified in 9.1.1.7;** | |
| | **1> configure the MAC layer in accordance with the *mtch-SchedulingInfo* (if included);** | |
| | **1> configure the physical layer in accordance with the *mbs-SessionInfoList, searchSpaceMTCH, pdsch-ConfrgMTCH,* applicable for the broadcast MRB, as included in the *MBSBroadcastConfiguration* message;** | |
| | **1> receive DL-SCH on the cell where the *MBSBroadcastConfiguration* message was received for the established MBS broadcast service using *g-RNTI* and *mtch-SchedulingInfo* (if included) in this message for this MBS broadcast service;** | |
| | **1> if an SDAP entity with the received *tmgi* does not exist:** | |
| | | **2> establish an SDAP entity as specified in TS 37.324 [24] clause 5.1.1.** |
| | | **2> indicate the establishment of the user plane resources for the *tmgi* to upper layers.** |

At step 1g-30, the UE 1g-10 receives MBS broadcast data through the MTCH (MBS traffic channel). Here, the MTCH means:

A point-to-multipoint downlink channel for transmitting MBS data of either multicast session or broadcast session from the network to the UE.

The UE 1g-10 may decode the physical downlink control channel (PDCCH) scrambled with the g-RNTI (group RNTI) to receive the MTCH. The g-RNTI required for PDCCH decoding may be provided in the form of a list of multiple g-RNTIs that includes one g-RNTI per MBS broadcast session (i.e., per mbs-SessionId or per TMGI (temporary mobile group identity)) through a MBS-SessionInfoList IE of the MBSBroadcastConfiguration message.

At step 1g-35, the UE 1g-10 may transition to connected mode by establishing an RRC connection to the base station 1g-05. Alternatively, the UE 1g-10 may already be in connected mode with the base station 1g-05 without performing step 1g-35.

At step 1g-40, the UE 1g-10 may receive SIB 21. SIB 21 may include information about the mapping between frequencies and MBS services, and more specifically, the ASN.1 format of SIB 21 may be as shown in Table 14 below.

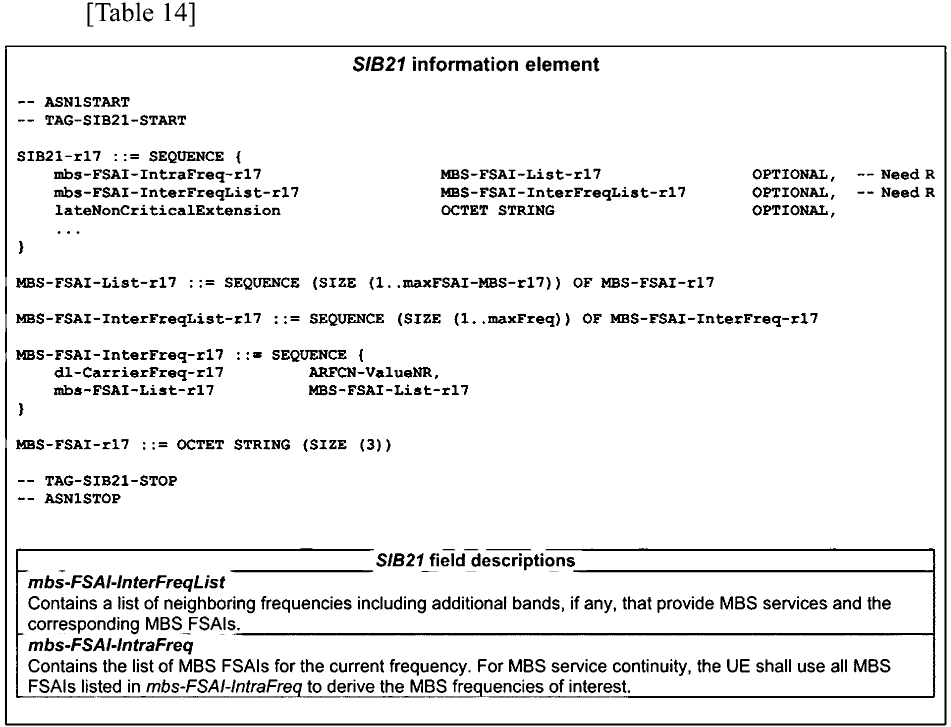

The presence of SIB 21 may enable reporting of an MBSInterestIndication message to be described later. Also, the absence of SIB 21 may disable reporting of an MBSInterestIndication message to be described later. The order of step 1g-35 and step 1g-40 may be reversed.

At step 1g-45, the MBS capable UE 1g-10 in connected mode may transmit an MBSInterestIndication message to the base station 1g-05 to notify the MBS broadcast service it is receiving or interested in and the associated frequency to the base station 1g-05. Additionally, the MBSInterestIndication message may be transmitted to the base station 1g-05 to transfer information about the priority of MBS broadcasts relative to unicast. Here, the ASN.1 format of the MBSInterestIndication message may be as shown in Table 15 below.

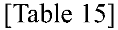

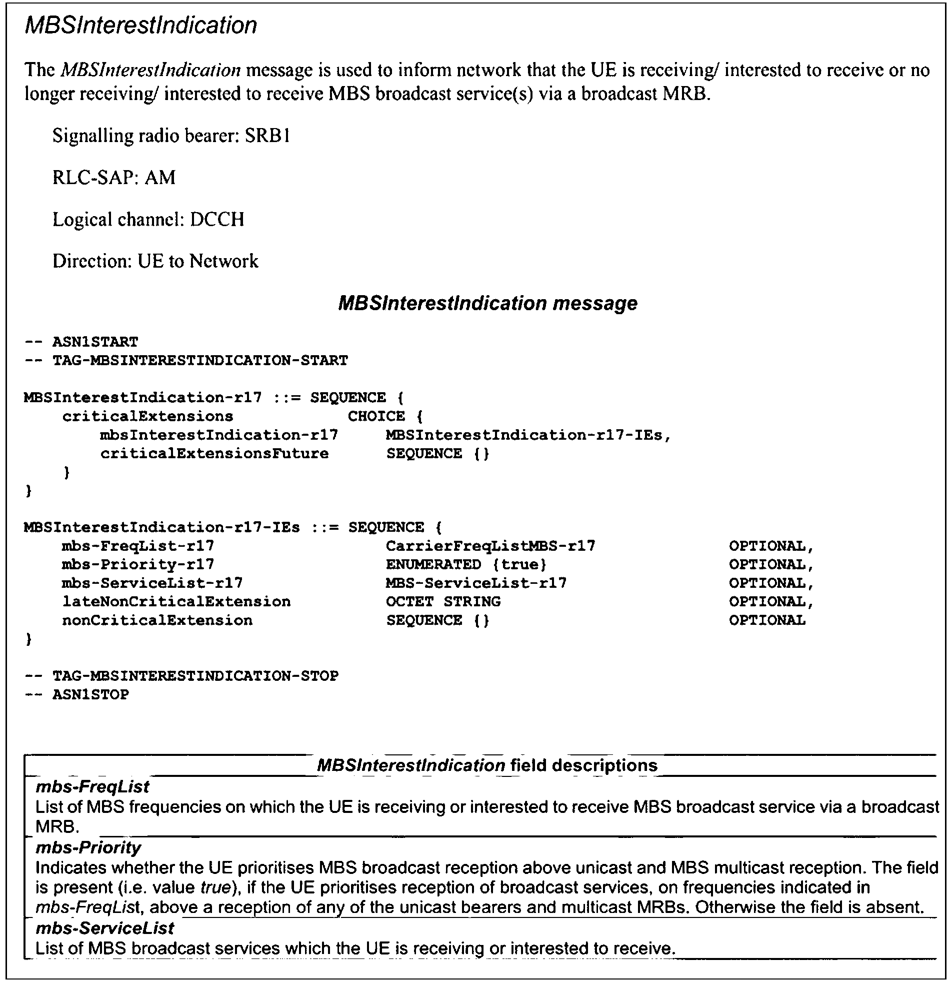

In addition, the MBSInterestIndication message may be configured and transmitted based on the procedures described in Table 16 and Table 17 below.

**[Table 16]**

| | | | | | |
|---|---|---|---|---|---|
| **5.9.4.1** | | | | | **General** |
| | | | | | 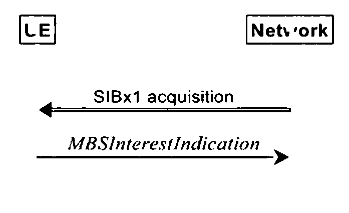 |
| **Figure 5.9.4.1-1: MBS Interest Indication** | | | | | |
| **The purpose of this procedure is to inform the network that the UE in RRC_CONNECTED state is receiving or is interested to receive MBS broadcast service(s) and to inform the network about the priority of MBS broadcast versus unicast and multicast MRB reception. MBS Interest Indication can only be sent after AS security activation.** | | | | | |
| **5.9.4.2** | | | | | **Initiation** |
| **An MBS capable UE in RRC_CONNECTED may initiate the procedure in several cases including upon successful connection establishment/resume, upon entering or leaving the broadcast service area, upon MBS broadcast session start or stop, upon change of interest, upon change of priority between MBS broadcast reception and unicast/multicast reception, upon change to a PCell broadcasting *SIB21,* upon receiving *SIB20* of an SCell via dedicated signalling, upon handover.** | | | | | |
| **Upon initiating the procedure, the UE shall:** | | | | | |
| | **1> if *SIB21* is provided by the PCell:** | | | | |
| | | **2> ensure having a valid version of *SIB21* for the PCell;** | | | |
| | | **2> if the UE did not transmit MBS Interest Indication since last entering RRC_CONNECTED state; or** | | | |
| | | **2> if since the last time the UE transmitted an MBS Interest Indication, the UE connected to a PCell not broadcasting *SIB21:*** | | | |
| | | | **3> if the set of MBS broadcast frequencies of interest, determined in accordance with 5.9.4.3, is not empty:** | | |
| | | | | **4> set the contents of MBS Interest Indication according to 5.9.4.5 and initiate transmission of the *MBSInterestIndication* message;** | |
| | | **2> else:** | | | |
| | | | **3> if the set of MBS broadcast frequencies of interest, determined in accordance with 5.9.4.3, is different from *mbs-FreqList* included in the last transmission of the MBS Interest Indication; or** | | |
| | | | **3> if the prioritisation of reception of all indicated MBS broadcast frequencies compared to reception of any of the established unicast bearers and multicast MRBs has changed since the last transmission of the MBS Interest Indication:** | | |
| | | | | **4> set the contents of MBS Interest Indication according to 5.9.4.5 and initiate transmission of the *MBSInterestIndication* message;** | |
| | **NOTE: The UE may send MBS Interest Indication even when it is able to receive the MBS services it is interested in i.e. to avoid that the network allocates a configuration inhibiting MBS broadcast reception.** | | | | |
| | **3> else if *SIB20* is provided for the PCell or for the SCell:** | | | | |
| | | **4> if since the last time the UE transmitted the MBS Interest Indication, the UE connected to a PCell not providing *SIB20* and the UE was not provided with *SIB20* for an SCell; or** | | | |
| | | **4> if the set of MBS broadcast services of interest determined in accordance with 5.9.4.4 is different from *mbs-ServiceList* included in the last transmission of the MBS Interest Indication:** | | | |
| | | | **5> set the contents of MBS Interest Indication according to 5.9.4.5 and initiate the transmission of *MBSInterestIndication* message.** | | |

**[Table 17]**

| | | | | |
|---|---|---|---|---|
| **5.9.4.3** | | | **MBS frequencies of interest determination** | |
| **The UE shall:** | | | | |
| | **1> consider a frequency to be part of the MBS frequencies of interest if the following conditions are met:** | | | |
| | | **2> at least one MBS session the UE is receiving or interested to receive via a broadcast MRB is ongoing or about to start; and** | | |
| | **NOTE 1: The UE may determine whether the session is ongoing from the start and stop time indicated in the User Service Description (USD), see TS 38.300 [2] or TS 23.247 [67].** | | | |
| | | **2> for at least one of these MBS sessions, *SIB21* acquired from the PCell includes mapping between the concerned frequency and one or more MBS FSAIs indicated in the USD for this session, or for at least one of these MBS sessions, the concerned frequency is not included in *SIB21* but is indicated in the USD for this session; and** | | |
| | **NOTE 2: The UE considers a frequency to be part of the MBS frequencies of interest even though NG-RAN may (temporarily) not employ a broadcast MRB for the concerned session, i.e., the UE does not verify if the session is indicated on MCCH.** | | | |
| | | **2> the *supportedBandCombination* the UE included in *UE-NR-Capability* contains at least one band combination including the concerned MBS frequency of interest.** | | |
| | **NOTE 3: When evaluating which frequencies the UE is capable of receiving, the UE does not take into account whether they are currently configured as serving frequencies.** | | | |
| **5.9.4.4** | | | **MBS services of interest determination** | |
| **The UE shall:** | | | | |
| | **1> consider an MBS service to be part of the MBS services of interest if the following conditions are met:** | | | |
| | | **2> the UE is receiving or interested to receive this service via a broadcast MRB; and** | | |
| | | **2> the session of this service is ongoing or about to start; and** | | |
| | | **2> one or more MBS FSAIs in the USD for this service is included in *SIB21* acquired from the PCell for a frequency belonging to the set of MBS frequencies of interest, determined according to 5.9.4.3.** | | |
| | **NOTE: The UE may determine whether the session is ongoing from the start and stop time indicated in the User Service Description (USD), see TS 38.300 [2] or TS 23.247 [67].** | | | |
| **5.9.4.5** | | | | **Setting of the contents of MBS Interest Indication** |
| **The UE shall set the contents of the MBS Interest Indication as follows:** | | | | |
| | **1> if the set of MBS frequencies of interest, determined in accordance with 5.9.4.3, is not empty:** | | | |
| | | **2> include *mbs-FreqList* and set it to include the MBS frequencies of interest sorted by decreasing order of interest, using the *absoluteFrequencySSB* for serving frequency, if applicable, and the *ARFCN-ValueNR(s)* as included in *SIB21* or in USD (for neighbouring frequencies);** | | |
| | | **2> include *mbs-Priority* if the UE prioritises reception of all indicated MBS frequencies above reception of any of the unicast bearers and multicast MRBs;** | | |
| | **NOTE: If the UE prioritises MBS broadcast reception and unicast/multicast data cannot be supported because of congestion on the MBS carrier(s), NG-RAN may for example initiate release of unicast bearers/multicast MRBs.** | | | |
| | | **2> if *SIB20* is provided for the PCell or for the SCell:** | | |
| | | | **3> include *mbs-ServiceList* and set it to indicate the set of MBS services of interest sorted by decreasing order of interest determined in accordance with 5.9.4.4.** | |

At step 1g-50, the UE 1g-10 may perform broadcast MRB release to stop receiving the MBS broadcast. Alternatively, broadcast MRB release may be performed based on the following cases:

Upon stop of the MBS session, upon leaving the cell broadcasting the MBS service UE is interested in, upon losing interest in the MBS service, when capability limitations start inhibiting reception of the concerned service.

Meanwhile, the specific procedure for broadcast MBS release may be as shown in Table 18 below.

**[Table 18]**

| | | |
|---|---|---|
| **Upon broadcast MRB release for MBS broadcast service, the UE shall:** | | |
| | **1> release the PDCP entity, RLC entity as well as the related MAC and physical layer configuration;** | |
| | **1> if the SDAP entity associated with the corresponding *tmgi* has no associated MRB:** | |
| | | **2> release the SDAP entity, as specified in TS 37.324 [24] clause 5.1.2;** |
| | | **2> indicate the release of the user plane resources for the *tmgi* to upper layers.** |

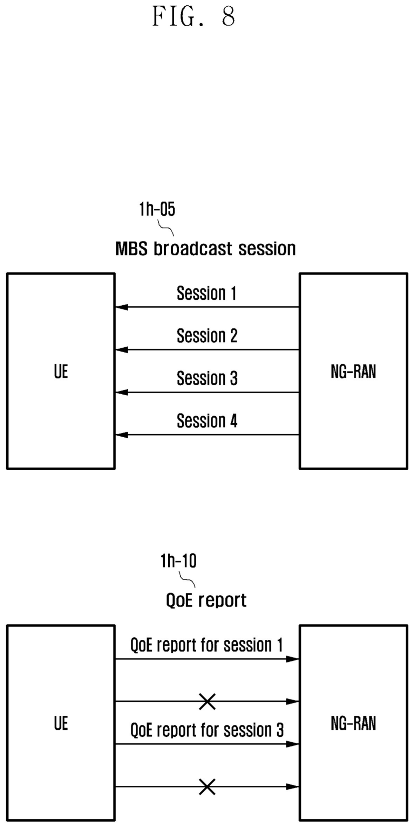

FIG. 8 is a diagram depicting an idea of activating or deactivating QoE measurement or reporting per MBS session.

The OAM or base station may configure the UE with QoE measurements for MBS services. Here, multiple MBS (broadcast) sessions may coexist in the base station or cell. In this case, the OAM or base station may intend to support QoE measurements for only specific sessions among the multiple sessions.

For example, at 1h-05, the base station provides services for a total of four MBS sessions. In this case, for the UE, performing QoE measurements for all MBS sessions being serviced, generating QoE measurement result reports, and transmitting them to the base station may be burdensome in terms of resources and energy usage. Additionally, for the OAM or base station, receiving QoE reports for all MBS sessions from the UE and processing them may be burdensome in terms of computation, processing, and resource management. Further, the OAM or base station may intend to distinguish between MBS sessions for which it wishes to improve service quality by receiving QoE measurement results (e.g., session 1 and session 3 in FIG. 8) (via network optimization) and MBS sessions for which it does not wish to receive QoE reports (e.g., session 2 and session 4 in FIG. 8). For example, the base station may intend to enable QoE measurement and reporting of UEs for MBS sessions that require high service quality or are serving a large number of users. However, it may intend to disable QoE measurement and reporting for MBS sessions that have lower service requirements or are serving a small number of UEs. Hence, at 1h-10, the OAM or base station may enable QoE measurement or reporting only for session 1 and session 3, and disable the same for session 2 and session 4.

To implement the above idea, the UE may report to the base station whether it supports QoE measurement for each MBS session. At this time, an indicator indicating whether QoE measurement is supported for each MBS session may be defined in the UECapability message and reported to the base station.

In addition, to implement the above idea, an indicator indicating whether to enable QoE measurement (or application layer measurement) per MBS session may be added to the MBSBroadcastConfiguration message, system information message, or other newly defined broadcast messages. For example, when the above indicator is additionally defined in the MBSBroadcastConfiguration message, the indicator (e.g., appLayerSupport) may be included for each MBS-SessionInfo in the MBSBroadcastConfiguration message as shown in Table 19 below.

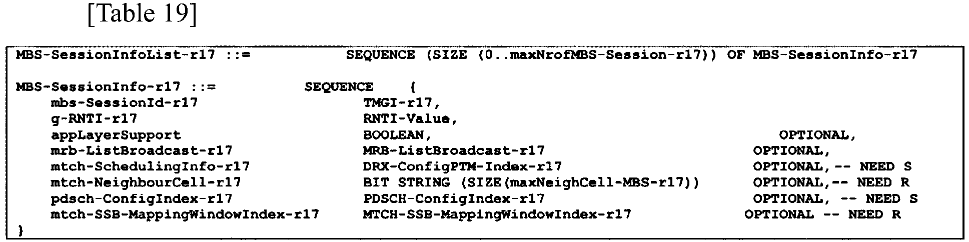

Here, the TMGI or g-RNTI delivered together with the above indicator (e.g., within identical MBS SessionInfo) may be used to indicate specific MBS session(s), and this indicator may be used to enable or disable QoE measurement or reporting for the corresponding MBS session(s). For example, the indicator may be defined as "ENUMERATED {enabled, disabled}" in the corresponding message. Additionally, the above indicator may be included as an optional IE. In this case, the base station supporting QoE measurement (or, base station supporting QoE measurement for MBSs, or base station supporting per-session QoE measurement) may include the above indicator in the corresponding message, where the indicator may be set to "true" or "enable" for sessions for which QoE measurement is desired and set to "false" or "disable" for sessions for which QoE measurement is not desired. The base station that does not support QoE measurement (or base station that does not support QoE measurement for MBSs, or base station that does not support per-session QoE measurement) may not include this indicator in the corresponding message. Certainly, the above indicator may be defined as "ENUMERATED {enabled}".

The RRC layer or AS layer of the UE having received the above indicator may forward the indicator to the APP layer (Option 1). More specifically, based on the establishment of a broadcast MRB, the UE may transfer the corresponding TMGI value to the higher layer (or APP layer), where the indicator (e.g., appLayerSupport) may be transferred separately or together with the TMGI. The specific procedure related to this is as described in Table 20 below.

**[Table 20]**

| | | |
|---|---|---|
| **Upon a broadcast MRB establishment, the UE shall:** | | |
| | **1> establish a PDCP entity and an RLC entity in accordance with *MRB-InfoBroadcast* for this broadcast MRB included in the *MBSBroadcastConfiguration* message and the configuration specified in 9.1.1.7;** | |
| | **1> configure the MAC layer in accordance with the *mtch-SchedulingInfo* (if included);** | |
| | **1> configure the physical layer in accordance with the *mbs-SessionInfoList, searchSpaceMTCH, pdsch-ConfigMTCH,* applicable for the broadcast MRB, as included in the *MBSBroadcastConfiguration* message;** | |
| | **1> receive DL-SCH on the cell where the *MBSBroadcastConfiguration* message was received for the established MBS broadcast service using *g-RNTI* and *mtch-SchedulingInfo* (if included) in this message for this MBS broadcast service;** | |
| | **1> inform upper layers about the establishment of the broadcast MRB by indicating the corresponding *tmgi* and *appLayerSupport;*** | |
| | **1> if an SDAP entity with the received *tmgi* does not exist:** | |
| | | **2> establish an SDAP entity as specified in TS 37.324 [24] clause 5.1.1.** |
| | | **2> indicate the establishment of the user plane resources for the *tmgi* to upper layers.** |

Alternatively, instead of the TMGI, the above indicator may be delivered to the APP layer together with the corresponding g-RNTI value. Here, the RRC layer of the UE may use an existing AT command or define a new AT command to transfer the indicator, TMGI or g-RNTI to the APP layer. The APP layer of the UE having received the above indicator may apply the indicator to the MBS session(s) corresponding to the TMGI (or g-RNTI) received together with the indicator. If the above indicator is set to "true" or "enabled" or is present, the APP layer of the UE may perform QoE measurement and generate QoE measurement reports only for the MBS session(s) to which the indicator is applied. As another embodiment, the UE APP layer may always perform QoE measurement and generate QoE measurement reports for all MBS sessions, but transfer QoE measurement reports only for the MBS session(s) to which the indicator is applied to the AS layer. As another embodiment, the UE APP layer may always perform QoE measurement for all MBS sessions, but may generate QoE measurement reports only for the MBS sessions to which the indicator is applied and forward them to the AS layer. On the other hand, if the above indicator is set to "false" or "disable" or is absent, the UE APP layer may not perform QoE measurement or generate QoE measurement reports for the MBS session(s) to which the indicator is applied. As another embodiment, the UE APP layer may always perform QoE measurement and generate QoE measurement reports for all MBS sessions, but may not transfer QoE measurement reports only for the MBS session(s) to which the indicator is applied to the AS layer. As another embodiment, the UE APP layer may always perform QoE measurement for all MBS sessions, but may not generate QoE measurement reports only for the MBS sessions to which the indicator is applied.

As another embodiment, the UE AS layer may filter QoE measurement result reports received from the APP layer based on the above indicator without forwarding the indicator to the APP layer (Option 2). That is, when receiving a QoE measurement result report from the APP layer, the UE AS layer may identify the MBS session for which the measurement result report is generated. To this end, the UE AS layer may receive a QoE measurement result report from the APP layer together with a TMGI or g-RNTI indicating specific MBS sessions. If the above indicator (e.g., appLayerSupport) received from the base station is set to "true" or "enable" or is present, the UE AS layer may transmit to the base station only the QoE measurement report generated for the corresponding MBS session among the QoE measurement reports received from the APP layer. If the above indicator (e.g., appLayerSupport) received from the base station is set to "false" or "disable" or is absent, the UE AS layer may not transmit or may discard the QoE measurement report generated for the corresponding MBS session to the base station even if having received it from the APP layer.

As another embodiment, the indicator indicating whether QoE measurement is performed for each MBS session may be used not only in a broadcast message but also in a dedicated message (transmitted on a UE basis). When used in a broadcast message as described above, the indicator may be applied commonly to all UEs for each MBS session. However, when used in dedicated messages, the indicator may be set differently for each MBS session and UE. For example, the OAM or base station may use dedicated messages to configure UE 1 with QoE measurement or reporting for MBS session 1 and MBS session 3 while configuring UE 2 with QoE measurement or reporting for MBS session 2 and MBS session 3. Here, QoE configuration information may be included in a RRCReconfiguration message or RRCResume message (i.e., dedicated message) according to the format of AppLayerMeasConfig. Further, together with this QoE configuration information, the indicator regarding QoE measurement per MBS session may be delivered in the message format shown in Table 21 below.

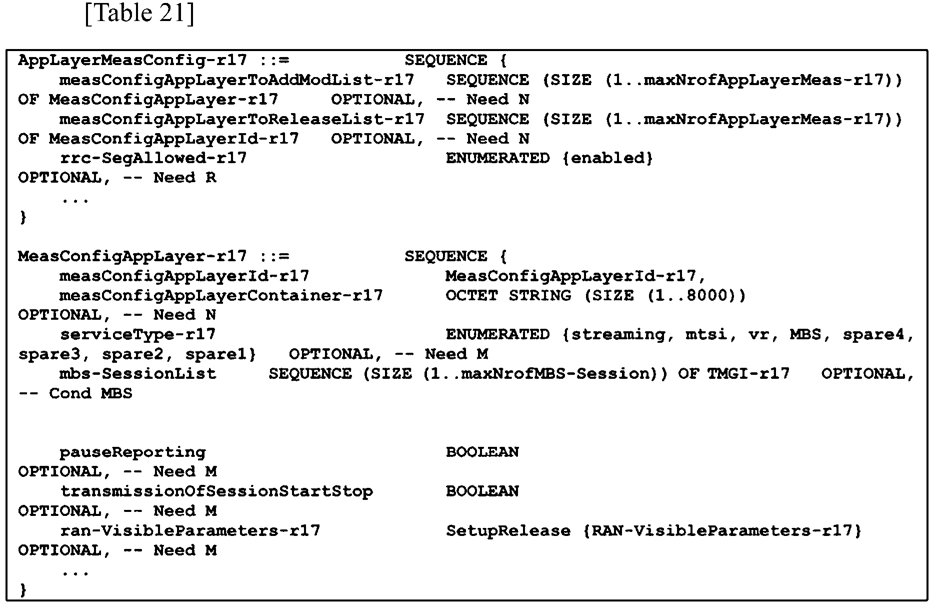

AppLayerMeasConfig may include multiple instances of MeasConfigAppLayer (QoE configuration information). Additionally, for each MeasConfigAppLayer, QoE configuration information ID (measConfigAppLayerId), APP layer QoE configuration information (measConfigAppLayerContainer), and service type (serviceType) of the QoE configuration information may be included. As shown in Table 21 above, MBS may be additionally defined as serviceType. Alternatively, MBS broadcast and MBS multicast may be separately defined as serviceType. If service Type is set to MBS or MBS broadcast, if the base station supports QoE measurement, if the base station supports QoE measurement for MBS, or if the base station supports QoE measurement per MBS session, the indicator (e.g., mbs-SessionList) regarding QoE measurement per MBS session may be included in MeasConfigAppLayer. The above indicator may be composed of multiple TMGIs or g-RNTIs to indicate multiple MBS sessions requiring QoE measurement. The UE may perform QoE measurement or reporting for MBS sessions included in the corresponding list. Conversely, the UE may not perform QoE measurement or reporting for MBS sessions not included in the corresponding list. Here, the scheme of option 1 or option 2 may be utilized. This indicator may be absent if serviceType is not MBS or MBS broadcast, if the base station does not support QoE measurement, if the base station does not support QoE measurement for MBS, or if the base station does not support per-session QoE measurement.

MBS QoE configuration information for a UE in RRC_INACTIVE or RRC_IDLE may be transmitted by being included in a dedicated RRC message (e.g., RRCRelease, newly defined message), where the above indicator may be included therein. Upon receiving the above indicator, as in option 1 above, the UE AS layer may transfer it to the APP layer, and the APP layer may enable or disable QoE measurement or reporting for each MBS session. Alternatively, as in option 2 above, the UE AS layer may filter the measurement reports per MBS session to transmit the same to the base station or not to transmit the same (discard).

As another embodiment, the OAM may include the indicator (e.g., mbs-SessionList) regarding QoE measurement per MBS session in APP layer QoE configuration information (e.g., measConfigAppLayerContainer) and transmit it to the UE. That is, the OAM may include the above indicator when generating APP layer QoE configuration information for an MBS service. For example, the OAM may identify the MBS session ID (TMGI or g-RNTI) (e.g., through communication with an entity for the MBS service, such as the MB-SMF (session management function)) and utilize it to enable or disable QoE measurement or reporting for each MBS session ID when generating APP layer QoE configuration information for the MBS. Upon receiving the APP layer QoE configuration information including the above indicator, the APP layer of the UE may perform QoE measurement or generate a measurement report only for a MBS session having been indicated as "enable", and may not perform QoE measurement or not generate or transmit a measurement report for a MBS session having been indicated as "disable".

When generating a QoE measurement result report and forwarding it to the AS layer, the APP layer of the UE may additionally transfer a TMGI or g-RNTI for each QoE report so as to indicate the MBS session associated with the report. Here, an existing AT command or new AT command may be used. Upon receiving this (TMGI or g-RNTI), the AS layer of the UE may transmit a QoE measurement result report including the received TMGI or g-RNTI to the base station via a MeasurementReportAppLayer message.

The UE may include the TMGI or g-RNTI in MeasurementReportAppLayer-r17-IEs if at least some of the following conditions are satisfied.
- The UE supports QoE measurement or report
- The UE supports QoE measurement or reporting for MBS
- The UE supports QoE measurement or reporting for each MBS session
- ServiceType of MeasurementReportAppLayer-r17-IEs is MBS or MBS broadcast
- The base station supports QoE measurement or configuration for each MBS session
- The base station supports QoE measurement or configuration for MBS
- The base station allows QoE measurement per MBS session

One instance of MeasurementReportAppLayer-r17-IEs may include QoE measurement result reports for multiple MBS sessions, and thus multiple MBS session IDs (TMGI or g-RNTI) may be defined or included.

When the AS layer of the UE reports QoE measurement results and corresponding MBS session ID(s) (TMGI or g-RNTI) to the base station, it may use the following message other than a MeasurementReportAppLayer message.
- MBSInterestIndication
- UEInformationResponse
- UEAssistanceInformation

Unlike the above-described method (in which an MBS session ID (TMGI or g-RNTI) is specified as an RRC parameter for each QoE measurement result report in the AS layer), the corresponding MBS session ID (TMGI or g-RNTI) may be defined and specified in a QoE measurement result report (e.g., measurementReportAppLayerContainer) of the APP layer. The QoE measurement result report (e.g., measurementReportAppLayerContainer) of one APP layer may include QoE measurement result reports for multiple MBS sessions, and thus multiple MBS session IDs (TMGI or g-RNTI) may be defined or included.

Related-art QoE measurement has been defined and used only for unicast services (streaming, multimedia telephony service over IMS (MTSI), virtual reality (VR)). However, if MBS is introduced as a service type for QoE measurement, an indicator may be introduced to distinguish between QoE configuration (or reporting) for MBS multicast and QoE configuration (or reporting) for MBS broadcast. If serviceType is MBS, the base station may include the above indicator (e.g., serviceCategory) to indicate whether the QoE configuration is for MBS multicast or MBS broadcast. If *serviceType* is MBS but the above indicator is absent, this may indicate that the QoE configuration is for both MBS multicast and broadcast. Alternatively, the above indicator may be defined as ENUMERATED {multicast, broadcast, both}, and a QoE configuration applicable commonly to MBS multicast and broadcast may be indicated as "both". If the above indicator is absent, this may indicate a QoE measurement configuration for a unicast service. Alternatively, it may be defined as ENUMERATED {unicast, multicast, broadcast} to thereby indicate unicast for a non-MBS service type, and indicate multicast or broadcast for MBS. The above indicator may be delivered up to the APP layer, and the APP layer may perform (not perform) QoE measurement or generate (not generate) a QoE measurement report for each cast type according to this indicator. Additionally, the QoE measurement report generated accordingly may indicate the cast type with which the QoE measurement result is associated.

QoE measurement result reports generated at the APP layer of the UE may be transferred to the AS layer and stored thereat. QoE measurement results reports in RRC connected mode, RRC inactive mode, or RRC standby (idle) mode may be stored in the AS layer of the UE. However, the memory size for storing QoE measurement result reports in the AS layer may be limited. For example, when the UE's memory is full, if additional QoE measurement result reports are generated and transmitted to the AS layer, the UE's AS layer may discard some of QoE measurement reports or as much as the exceeded size. To this end, the OAM, CN, or base station may configure the priority for storing QoE measurement reports together with QoE configuration information. For example, the UE may be indicated to prioritize or deprioritize QoE measurement results reports for the MBS service type over those for other service types (e.g., mbsPriorityOverUnicast). This indicator may be included if serviceType is MBS. If this indicator is absent, this may mean that all service types have the same priority. In addition, the priority (e.g., priority) may be specified for each QoE configuration (e.g., MeasConfigAppLayer). When the memory of the UE becomes full, the UE may first discard measurement reports generated for QoE measurement configurations with the lowest priority.

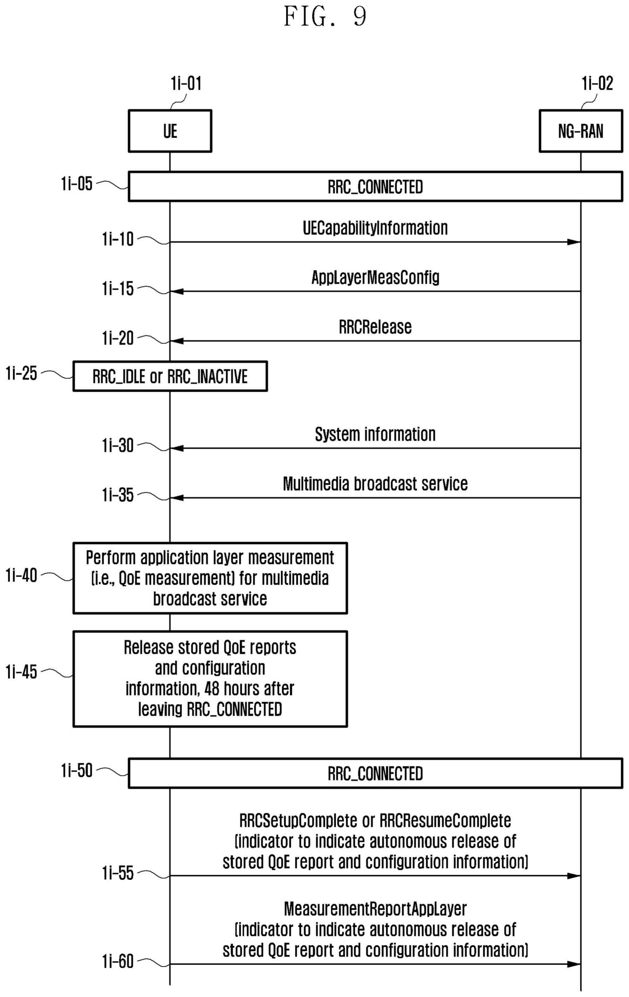

FIG. 9 illustrates a flow diagram in which a UE in RRC idle mode (RRC_IDLE) or RRC inactive mode (RRC_INACTIVE) autonomously releases QoE configuration information and corresponding QoE measurement results.

With reference to FIG. 9, the UE 1i-01 may establish an RRC connection to the base station 1i-02 and be in RRC connected mode (RRC_CONNECTED) (1i-05).

At step 1i-10, the UE 1i-01 may transmit a UE capability information message (UECapabilityInformation) to the base station 1i-02.

At step 1i-15, the base station 1i-02 may transmit, to the UE 1i-01, a specific RRC message (e.g., RRCResume or RRCReconfiguration) including configuration information for application layer measurements (AppLayerMeasConfig). The information included in the above message may follow at least one of the aforementioned embodiments. Additionally, the above message may further include an indicator indicating that each QoE measurement configuration information for multimedia broadcast services is to be applied in all RRC states (RRC_IDLE, RRC_INACTIVE, RRC_CONNECTED) or only in RRC_INACTIVE and RRC_IDLE. Additionally, the message may further include an indicator indicating whether the UE is allowed to autonomously release stored QoE configuration information and associated QoE measurement results based on expiration of a specified time (e.g., 48 hours) after leaving RRC connected mode (for example, an indicator indicating whether the UE is allowed to release/discard QoE configuration information and QoE measurement results in response to the satisfaction of a condition, such as the passage of a specific amount of time, without receiving a separate indication/command from the base station). Here, the QoE measurement result may refer to at least one piece of the information in the measurement result report described above in the embodiment of FIG. 5. For reference, the above QoE configuration information and corresponding QoE measurement results may be limited to multimedia broadcast services, may be applicable to services for which QoE measurement can be performed in RRC_IDLE or RRC_INACTIVE, or may be applicable to all services (regardless of RRC state). This may equally apply to the following descriptions.

At step 1i-20, the base station 1i-02 may transmit an RRC connection release message (RRCRelease) to the UE 1i-01. Additionally, this message may include an indicator indicating whether the UE is allowed to autonomously release the QoE configuration information and corresponding QoE measurement results stored by the UE in response to the expiry of 48 hours after leaving the RRC connected mode.

At step 1i-25, the UE 1i-01 may transition to RRC idle mode (RRC_IDLE) or RRC inactive mode (RRC_INACTIVE). That is, if the RRC connection release message received at step 11-20 includes suspend configuration information (suspendConfig), the UE may transition to RRC inactive mode, and if not, the UE may transition to RRC idle mode.

At step 1i-30, the UE 1i-01 in RRC idle mode or RRC inactive mode may camp on a suitable cell to obtain system information.

At step 1i-35, the UE 1i-01 in RRC idle mode or RRC inactive mode may receive multimedia broadcast services according to the above-described embodiments.

At step 1i-40, the UE 1i-01 in RRC idle mode or RRC inactive mode may perform application layer measurements for multimedia broadcast services (i.e., QoE measurements for multimedia broadcast services).

At step 1i-45, if 48 hours have elasped after leaving RRC connected mode but the base station 1i-02 has not retrieved the QoE measurement results stored in the UE's AS memory, the UE 1i-01 in RRC idle mode or RRC inactive mode may release the QoE measurement results and QoE configuration information stored in the UE's AS memory (e.g., the UE's AS layer may release the QoE configuration information set for the UE by notifying the UE's higher layer entity to release the QoE configuration information). For reference, the above operation may be performed regardless of the indication of the base station 1i-02 at step 1i-15 or step 1i-20, or may be performed only based on the indication of the base station 1i-02.

At step 1i-50, the UE 1i-01 in RRC idle mode or RRC inactive mode may transition to RRC connected mode through an RRC connection setup procedure or RRC connection resume procedure with the base station 1i-02. That is, the UE in RRC idle mode may perform an RRC connection setup procedure, and the UE in RRC inactive mode may perform an RRC connection resume procedure.

At step 1i-55, the UE 1i-01 in RRC connected mode may transmit an RRC connection setup complete message (RRCSetupComplete) or an RRC connection resume complete message (RRCResumeComplete) to the base station 1i-02. The above message may include an information element notifying the base station of the operation performed at step 1i-45. This is to notify the base station that the UE has autonomously released the stored QoE measurement results and configuration information.

At step 1i-60, the UE 1i-01 in RRC connected mode may transmit a specific RRC message (e.g., MeasurementReportAppLayer) including QoE measurement result information to the base station 1i-02. The above message may include an information element notifying the base station 1i-02 of the operation performed at step 1i-45. This is to notify the base station that the UE 1i-01 has autonomously released the stored QoE measurement results and configuration information.

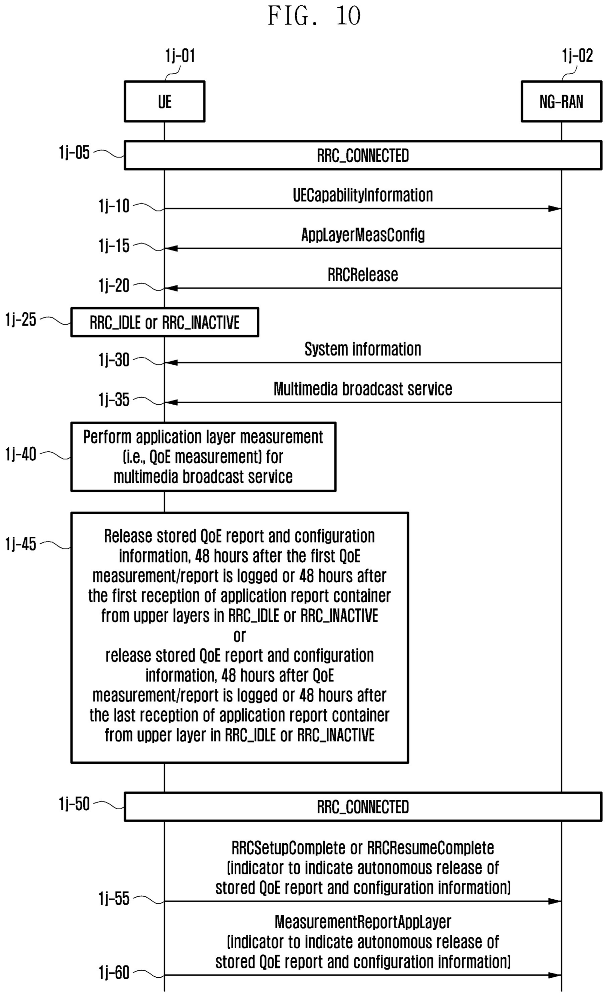

FIG. 10 illustrates a flow diagram in which a UE in RRC idle mode (RRC_IDLE) or RRC inactive mode (RRC_INACTIVE) autonomously releases QoE configuration information and corresponding QoE measurement results.

With reference to FIG. 10, the UE 1j-01 may establish an RRC connection to the base station 1j-02 and be in RRC connected mode (RRC_CONNECTED) (1j-05).

At step 1j-10, the UE 1j-01 may transmit a UE capability information message (UECapabilityInformation) to the base station 1j-02. The information included in this message may follow the aforementioned embodiments.

At step 1j-15, the base station 1j-02 may transmit a specific RRC message (e.g., RRCResume or RRCReconfiguration) including configuration information for application layer measurements (AppLayerMeasConfig) to the UE 1j-01. The information included in this message may follow at least one of the aforementioned embodiments. Additionally, the above message may include an indicator indicating that each QoE measurement configuration information for multimedia broadcast services is to be applied in all RRC states (RRC_IDLE, RRC_INACTIVE, RRC_CONNECTED) or only in RRC_INACTIVE and RRC_IDLE. The above message may include an indicator indicating whether the UE in RRC_IDLE or RRC_INACTIVE is allowed to autonomously release stored QoE configuration information and corresponding QoE measurement results in response to the expiry of 48 hours after first receiving an application report container from the UE's higher layer entity or in response to the expiry of 48 hours after first storing QoE measurement results. Alternatively, the above message may include an indicator indicating whether the UE in RRC_IDLE or RRC_INACTIVE is allowed to autonomously release stored QoE configuration information and corresponding QoE measurement results in response to the expiry of 48 hours after last receiving an application report container from the UE's higher layer entity or in response to the expiry of 48 hours after last storing QoE measurement results. For reference, the above QoE configuration information and corresponding QoE measurement results may be limited to multimedia broadcast services, may be applicable to services for which QoE measurement can be performed in RRC_IDLE or RRC_INACTIVE, or may be applicable to all services (regardless of RRC state). This may equally apply to the following descriptions.

At step 1j-20, the base station 1j-02 may transmit an RRC connection release message (RRCRelease) to the UE 1j-01. The above message may include an indicator indicating whether the UE in RRC_IDLE or RRC_INACTIVE is allowed to autonomously release stored QoE configuration information and corresponding QoE measurement results in response to the expiry of 48 hours after first receiving an application report container from the UE's higher layer entity or in response to the expiry of 48 hours after first storing QoE measurement results. Alternatively, the above message may include an indicator indicating whether the UE in RRC_IDLE or RRC_INACTIVE is allowed to autonomously release stored QoE configuration information and corresponding QoE measurement results in response to the expiry of 48 hours after last receiving an application report container from the UE's higher layer entity or based on the expiry of 48 hours after last storing QoE measurement results.

At step 1j-25, the UE 1j-01 may transition to RRC idle mode (RRC_IDLE) or RRC inactive mode (RRC_INACTIVE). That is, if the RRC connection release message received at step 1j-20 includes suspend configuration information (suspendConfig), the UE may transition to RRC inactive mode, and if not, the UE may transition to RRC idle mode.

At step 1j-30, the UE 1j-01 in RRC idle mode or RRC inactive mode may camp on a suitable cell to obtain system information.

At step 1j-35, the UE 1j-01 in RRC idle mode or RRC inactive mode may receive multimedia broadcast services according to the above-described embodiments.

At step 1j-40, the UE 1j-01 in RRC idle mode or RRC inactive mode may perform application layer measurements for multimedia broadcast services (i.e., QoE measurements for multimedia broadcast services).

At step 1j-45, the UE 1j-01 in RRC idle mode or RRC inactive mode may release the QoE measurement result stored in the UE's AS memory if at least one of the following conditions is satisfied (i.e., the conditions may be evaluated in combination or separately), where the UE's AS layer may release the QoE configuration information set for the UE by notifying the UE's higher layer entity to release the QoE configuration information.

Condition 1: 48 hours have elapsed after the QoE measurement result is first stored in the UE's AS memory through step 1j-40, but the base station 1j-02 has not retrieved the QoE measurement result stored in the UE's AS memory

Condition 2: 48 hours have elapsed after an application report container is first received from the UE's higher layer entity through step 1j-40, but the base station 1j-02 has not retrieved QoE measurement results

Condition 3: condition 1 or condition 2 may be evaluated only according to the indication of the base station at step 1j-15 or step 1j-20.

For reference, at step 1j-45, the UE 1j-01 may release all QoE measurement results stored in the AS memory (thus, also release QoE configuration information in a manner described above), or release only QoE measurement results stored in the AS memory for each QoE configuration (e.g., measConfigAppLayerId). For example, the UE 1j-01 in RRC idle mode or RRC inactive mode may release only specific QoE configuration information and corresponding QoE measurement results, if 48 hours have elapsed after QoE measurement results for a specific QoE configuration are first stored in the UE's AS memory through step 1j-40 but the base station 1j-02 has not retrieved the corresponding QoE measurement results stored in the UE's AS memory, or if 48 hours have elapsed after an application report container for a specific QoE configuration is first received from the UE's higher layer entity but the base station 1j-02 has not retrieved the corresponding QoE measurement results.

Alternatively, at step 1j-45, the UE 1j-01 in RRC idle mode or RRC inactive mode may release the QoE measurement result stored in the UE's AS memory if at least one of the following conditions is satisfied (i.e., the conditions may be evaluated in combination or separately), where the UE's AS layer may release the QoE configuration information set for the UE by notifying the UE's higher layer entity to release the QoE configuration information.

Condition 1: 48 hours have elapsed after the QoE measurement result is last stored in the UE's AS memory through step 1j-40, but the base station 1j-02 has not retrieved the QoE measurement result stored in the UE's AS memory

Condition 2: 48 hours have elapsed after an application report container is last received from the UE's higher layer entity through step 1j-40, but the base station 1j-02 has not retrieved QoE measurement results

Condition 3: condition 1 or condition 2 may be evaluated only according to the indication of the base station at step 1j-15 or step 1j-20.

For reference, at step 1j-45, the UE may release all QoE measurement results stored in the AS memory (thus, also release QoE configuration information in a manner described above), or release only QoE measurement results stored in the AS memory for each QoE configuration (e.g., measConfigAppLayerId). For example, the UE 1j-01 in RRC idle mode or RRC inactive mode may release only specific QoE configuration information and corresponding QoE measurement results, if 48 hours have elapsed after QoE measurement results for a specific QoE configuration are last stored in the UE's AS memory through step 1j-40 but the base station 1j-02 has not retrieved the corresponding QoE measurement results stored in the UE's AS memory, or if 48 hours have elapsed after the last application report container for a specific QoE configuration is received from the UE's higher layer entity but the base station 1j-02 has not retrieved the corresponding QoE measurement results.

At step 1j-50, the UE 1j-01 in RRC idle mode or RRC inactive mode may transition to RRC connected mode through an RRC connection setup procedure or RRC connection resume procedure with the base station 1j-02. That is, the UE in RRC idle mode may perform an RRC connection setup procedure, and the UE in RRC inactive mode may perform an RRC connection resume procedure.

At step 1j-55, the UE 1j-01 in RRC connected mode may transmit an RRC connection setup complete message (RRCSetupComplete) or an RRC connection resume complete message (RRCResumeComplete) to the base station 1j-02. The above message may include an information element notifying the base station of the operation performed at step 1j-45. This is to notify the base station 1j-02 that the UE 1j-01 has autonomously released the stored QoE measurement results and configuration information without separate indications.

At step 1j-60, the UE 1j-01 in RRC connected mode may transmit a specific RRC message (e.g., MeasurementReportAppLayer) including QoE measurement result information to the base station 1j-02. The above message may include an information element notifying the base station 1j-02 of the operation performed at step 1j-45. This is to notify the base station that the UE 1j-01 has autonomously released the stored QoE measurement results and configuration information.

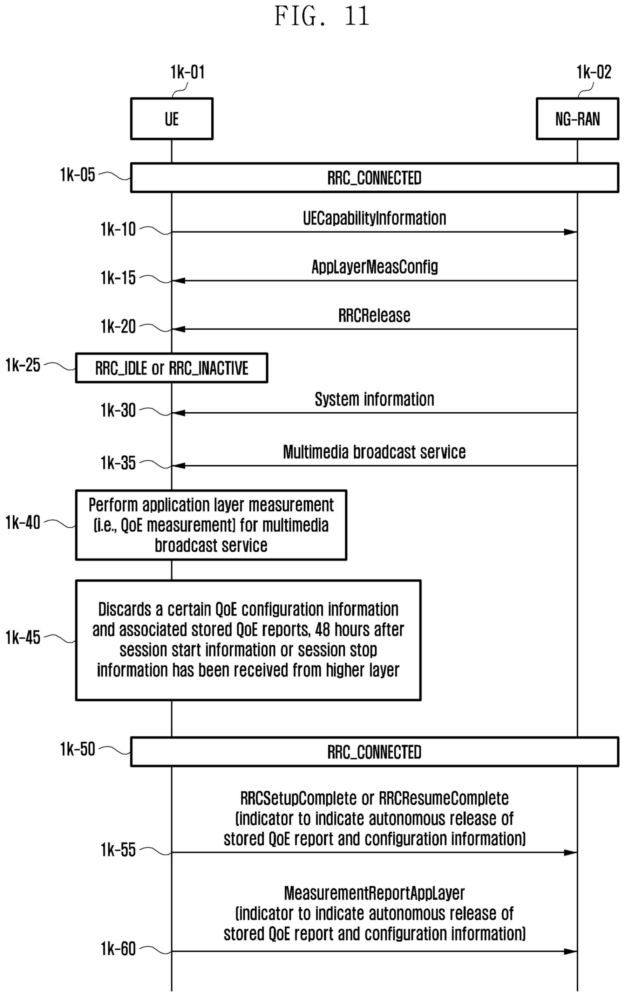

FIG. 11 illustrates a flow diagram in which a UE in RRC idle mode (RRC_IDLE) or RRC inactive mode (RRC_INACTIVE) autonomously releases QoE configuration information and corresponding QoE measurement results.

With reference to FIG. 11, the UE 1k-01 may establish an RRC connection to the base station 1k-02 and be in RRC connected mode (RRC_CONNECTED) (1k-05).

At step 1k-10, the UE 1k-01 may transmit a UE capability information message (UECapabilityInformation) to the base station 1k-02. The information included in this message may follow the aforementioned embodiments.

At step 1k-15, the base station 1k-02 may transmit a specific RRC message (e.g., RRCResume or RRCReconfiguration) including configuration information for application layer measurements (AppLayerMeasConfig) to the UE 1k-01. The information included in this message may follow at least one of the aforementioned embodiments. Additionally, the above message may include an indicator indicating that each QoE measurement configuration information for multimedia broadcast services is to be applied in all RRC states (RRC_IDLE, RRC_INACTIVE, RRC_CONNECTED) or only in RRC_INACTIVE and RRC_IDLE. The above message may also include an indicator indicating whether the UE is allowed to autonomously release the QoE configuration information and corresponding QoE measurement results stored by the UE if 48 hours have elapsed after the UE's AS receives session start or stop information for specific measConfigAppLayerld from the UE's higher layer entity.

At step 1k-20, the base station 1k-02 may transmit an RRC connection release message (RRCRelease) to the UE 1k-01. This message may include an indicator indicating whether the UE is allowed to autonomously release the QoE configuration information and corresponding QoE measurement results stored by the UE if 48 hours have elapsed after the UE's AS receives session start or stop information for specific measConfigAppLayerId from the UE's higher layer entity.

At step 1k-25, the UE 1k-01 may transition to RRC idle mode (RRC_IDLE) or RRC inactive mode (RRC_INACTIVE). That is, if the RRC connection release message received at step 1k-20 includes suspend configuration information (suspendConfig), the UE may transition to RRC inactive mode, and if not, the UE may transition to RRC idle mode.

At step 1k-30, the UE 1k-01 in RRC idle mode or RRC inactive mode may camp on a suitable cell to obtain system information.

At step 1k-35, the UE 1k-01 in RRC idle mode or RRC inactive mode may receive multimedia broadcast services according to the above-described embodiments.

At step 1k-40, the UE 1k-01 in RRC idle mode or RRC inactive mode may perform application layer measurements for multimedia broadcast services (i.e., QoE measurements for multimedia broadcast services).

At step 1k-45, the UE 1k-01 in RRC idle mode or RRC inactive mode may release QoE configuration information and QoE measurement results for specific measConfigAppLayerId if at least one of the following conditions is satisfied (i.e., the conditions may be evaluated in combination or separately).

Condition 1: 48 hours have elapsed after the UE's AS receives session start or stop information for specific measConfigAppLayerId from the UE's higher layer entity

The time point at which the session start or stop information is received may be when the UE is in RRC connected state or when the UE is not in RRC connected state (i.e., in RRC idle mode or RRC inactive mode).

Condition 2: 48 hours have elapsed after the UE's AS receives session start or stop information for specific measConfigAppLayerId from the UE's higher layer entity, but the base station 1k-02 has not retrieved the QoE measurement results related to the QoE measurement configuration

The time point at which the session start or stop information is received may be when the UE is in RRC connected state or when the UE is not in RRC connected state (i.e., in RRC idle mode or RRC inactive mode).

Condition 3: the base station 1k-02 instructs the UE 1k-01 to autonomously release the stored QoE configuration information and QoE measurement results at step 1k-15 or step 1k-20

At step 1k-50, the UE 1k-01 in RRC idle mode or RRC inactive mode may transition to RRC connected mode through an RRC connection setup procedure or RRC connection resume procedure with the base station 1k-02. That is, the UE in RRC idle mode may perform an RRC connection setup procedure, and the UE in RRC inactive mode may perform an RRC connection resume procedure.

At step 1k-55, the UE 1k-01 in RRC connected mode may transmit an RRC connection setup complete message (RRCSetupComplete) or an RRC connection resume complete message (RRCResumeComplete) to the base station 1k-02. The above message may include an information element notifying the base station 1k-02 of the operation performed at step 1k-45. This is to notify the base station 1k-02 that the UE 1k-01 has autonomously released the stored QoE measurement results and configuration information.

At step 1k-60, the UE 1k-01 in RRC connected mode may transmit a specific RRC message (e.g., MeasurementReportAppLayer) including QoE measurement result information to the base station 1k-02. The above message may include an information element notifying the base station 1k-02 of the operation performed at step 1k-45. This is to notify the base station 1k-02 that the UE 1k-01 has autonomously released the stored QoE measurement results and configuration information.

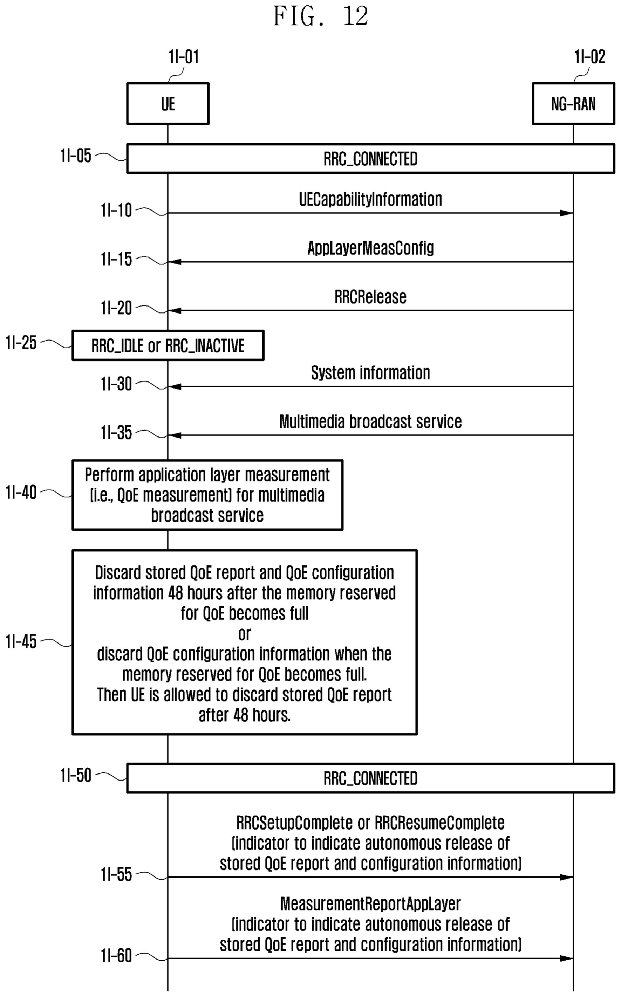

FIG. 12 illustrates a flow diagram in which a UE in RRC idle mode (RRC_IDLE) or RRC inactive mode (RRC_INACTIVE) autonomously releases QoE configuration information and corresponding QoE measurement results.

With reference to FIG. 12, the UE 11-01 may establish an RRC connection to the base station 11-02 and be in RRC connected mode (RRC_CONNECTED) (11-05).

At step 11-10, the UE 11-01 may transmit a UE capability information message (UECapabilityInformation) to the base station 11-02. The information included in this message may follow the aforementioned embodiments.

At step 11-15, the base station 11-02 may transmit a specific RRC message (e.g., RRCResume or RRCReconfiguration) including configuration information for application layer measurements (AppLayerMeasConfig) to the UE 11-01. The information included in this message may follow at least one of the aforementioned embodiments. Additionally, the above message may include an indicator indicating that each QoE measurement configuration information for multimedia broadcast services is to be applied in all RRC states (RRC_IDLE, RRC_INACTIVE, RRC_CONNECTED) or only in RRC_INACTIVE and RRC_IDLE. The above message may also include an indicator indicating whether the UE 11-01 is allowed to autonomously release the QoE configuration information and corresponding QoE measurement results stored by the UE.

At step 11-20, the base station 11-02 may transmit an RRC connection release message (RRCRelease) to the UE 11-01. The above message may include an indicator indicating whether the UE is allowed to autonomously release the QoE configuration information and corresponding QoE measurement results stored by the UE.

At step 11-25, the UE 11-01 may transition to RRC idle mode (RRC_IDLE) or RRC inactive mode (RRC_INACTIVE). That is, if the RRC connection release message received at step 11-20 includes suspend configuration information (suspendConfig), the UE may transition to RRC inactive mode, and if not, the UE may transition to RRC idle mode.

At step 11-30, the UE 11-01 in RRC idle mode or RRC inactive mode may camp on a suitable cell to obtain system information.

At step 11-35, the UE 11-01 in RRC idle mode or RRC inactive mode may receive multimedia broadcast services according to the above-described embodiments.

At step 11-40, the UE 11-01 in RRC idle mode or RRC inactive mode may perform application layer measurements for multimedia broadcast services (i.e., QoE measurements for multimedia broadcast services).

At step 11-45, the UE 11-01 in RRC idle mode or RRC inactive mode may autonomously release QoE-related information (e.g., QoE measurement results) and QoE configuration information stored in the UE's AS memory if at least one of the following conditions is satisfied (i.e., the conditions may be evaluated in combination or separately).

Condition 1: 48 hours have elapsed after the UE's AS memory storing QoE-related information becomes (for the first time) full

Condition 2: after the UE's AS memory storing QoE-related information becomes (for the first time) full, the base station does not retrieve it for 48 hours

Condition 3: the base station 11-02 instructs the UE 11-01 to autonomously release the stored QoE configuration information and QoE measurement results at step 11-15 or step 11-20

For reference, at step 11-45, if the UE's AS memory storing QoE-related information becomes (for the first time) full, the UE 11-01 may release the QoE configuration information thereby not to further perform QoE measurements. Additionally, thereafter, if the base station 11-02 does not retrieve the QoE measurement results stored in the UE's AS memory even after 48 hours have elapsed, the UE 11-01 may release the QoE-related information.

At step 11-50, the UE 11-01 in RRC idle mode or RRC inactive mode may transition to RRC connected mode through an RRC connection setup procedure or RRC connection resume procedure with the base station 11-02. That is, the UE in RRC idle mode may perform an RRC connection setup procedure, and the UE in RRC inactive mode may perform an RRC connection resume procedure.

At step 11-55, the UE 11-01 in RRC connected mode may transmit an RRC connection setup complete message (RRCSetupComplete) or an RRC connection resume complete message (RRCResumeComplete) to the base station 11-02. The above message may include an information element notifying the base station 11-02 of the operation performed at step 11-45. This is to notify the base station 11-02 that the UE 11-01 has autonomously released the stored QoE measurement results and configuration information.

At step 11-60, the UE 11-01 in RRC connected mode may transmit a specific RRC message (e.g., MeasurementReportAppLayer) including QoE measurement result information to the base station 11-02. The above message may include an information element notifying the base station 11-02 of the operation performed at step 11-45. This is to notify the base station 11-02 that the UE 11-01 has autonomously released the stored QoE measurement results and configuration information.

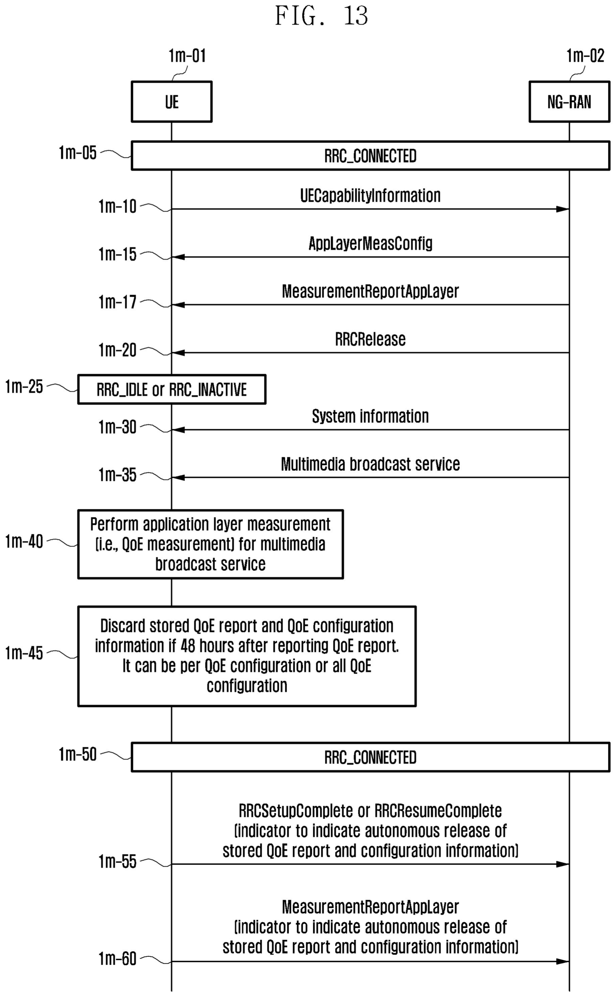

FIG. 13 illustrates a flow diagram in which a UE in RRC idle mode (RRC_IDLE) or RRC inactive mode (RRC_INACTIVE) autonomously releases QoE configuration information and corresponding QoE measurement results.

With reference to FIG. 13, the UE 1m-01 may establish an RRC connection to the base station 1m-02 and be in RRC connected mode (RRC_CONNECTED) (1m-05).

At step 1m-10, the UE 1m-01 may transmit a UE capability information message (UECapabilityInformation) to the base station 1m-02. The information included in this message may follow the aforementioned embodiments.

At step 1m-15, the base station 1m-02 may transmit a specific RRC message (e.g., RRCResume or RRCReconfiguration) including configuration information for application layer measurements (AppLayerMeasConfig) to the UE 1m-01. The information included in this message may follow at least one of the aforementioned embodiments. Additionally, the above message may include an indicator indicating that each QoE measurement configuration information for multimedia broadcast services is to be applied in all RRC states (RRC_IDLE, RRC_INACTIVE, RRC_CONNECTED) or only in RRC_INACTIVE and RRC_IDLE. The above message may also include an indicator indicating whether the UE is allowed to autonomously release the stored QoE configuration information and corresponding QoE measurement results.

At step 1m-17, the UE 1m-01 may transmit a MeasurementReportAppLayer message including QoE measurement result to the base station 1m-02.

At step 1m-20, the base station 1m-02 may transmit an RRC connection release message (RRCRelease) to the UE 1m-01. This message may include an indicator indicating whether the UE is allowed to autonomously release the stored QoE configuration information and corresponding QoE measurement results.

At step 1m-25, the UE 1m-01 may transition to RRC idle mode (RRC_IDLE) or RRC inactive mode (RRC_INACTIVE). That is, if the RRC connection release message received at step 1m-20 includes suspend configuration information (suspendConfig), the UE may transition to RRC inactive mode, and if not, the UE may transition to RRC idle mode.

At step 1m-30, the UE 1m-01 in RRC idle mode or RRC inactive mode may camp on a suitable cell to obtain system information.

At step 1m-35, the UE 1m-01 in RRC idle mode or RRC inactive mode may receive multimedia broadcast services according to the above-described embodiments.

At step 1m-40, the UE 1m-01 in RRC idle mode or RRC inactive mode may perform application layer measurements for multimedia broadcast services (i.e., QoE measurements for multimedia broadcast services).

At step 1m-45, the UE 1m-01 in RRC idle mode or RRC inactive mode may autonomously release the QoE measurement results stored in the AS memory for specific QoE configuration information and the specific QoE configuration information if at least one of the following conditions is satisfied (i.e., the conditions may be evaluated in combination or separately).

Condition 1: after the UE 1m-01 reports QoE measurement results for specific measConfigAppLayerId to the base station 1m-02, it does not report any more QoE measurement results to the base station 1m-02 for 48 hours

Condition 2: the base station 1m-02 instructs the UE 1m-01 to autonomously release the stored QoE configuration information and QoE measurement results at step 1m-15 or step 1m-20

For reference, at step 1m-45, if the UE 1m-01 does not report any more QoE measurement results to the base station 1m-02 for 48 hours after transmitting the most recent QoE measurement result to the base station 1m-02, it may release the QoE-related information (e.g., QoE measurement results) stored in the AS memory and release the QoE configuration information. That is, the UE 1m-01 may release all the stored QoE measurement results and QoE configuration information.

At step 1m-50, the UE 1m-01 in RRC idle mode or RRC inactive mode may transition to RRC connected mode through an RRC connection setup procedure or RRC connection resume procedure with the base station 1m-02. That is, the UE in RRC idle mode may perform an RRC connection setup procedure, and the UE in RRC inactive mode may perform an RRC connection resume procedure.

At step 1m-55, the UE 1m-01 in RRC connected mode may transmit an RRC connection setup complete message (RRCSetupComplete) or an RRC connection resume complete message (RRCResumeComplete) to the base station 1m-02. The above message may include an information element notifying the base station 1m-02 of the operation performed at step 1m-45. This is to notify the base station 1m-02 that the UE 1m-01 has autonomously released the stored QoE measurement results and configuration information.

At step 1m-60, the UE 1m-01 in RRC connected mode may transmit a specific RRC message (e.g., MeasurementReportAppLayer) including QoE measurement result information to the base station 1m-02. The above message may include an information element notifying the base station 1m-02 of the operation performed at step 1m-45. This is to notify the base station 1m-02 that the UE 1m-01 has autonomously released the stored QoE measurement results and configuration information.

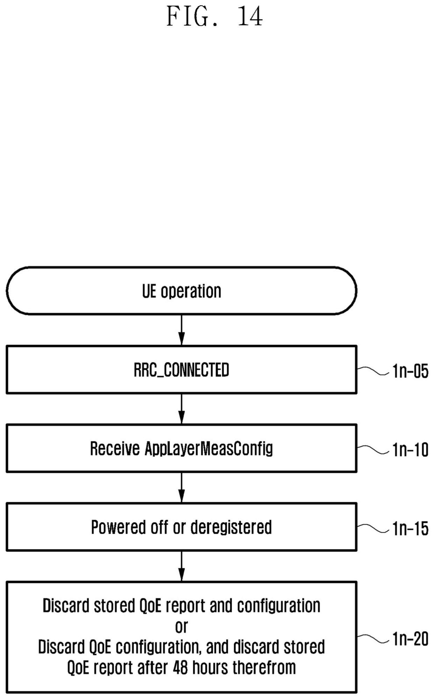

FIG. 14 illustrates a flowchart in which a UE autonomously releases QoE configuration information and corresponding QoE measurement results.

With reference to FIG. 14, the UE 1n-01 may establish an RRC connection to the base station 1n-02 and be in RRC connected mode (RRC_CONNECTED) (1n-05).

At step 1n-10, the base station 1n-02 may transmit a specific RRC message (e.g., RRCResume or RRCReconfiguration) including configuration information (AppLayerMeasConfig) for application layer measurements to the UE 1n-01. The information included in the above message may follow at least one of the embodiments described above.

At step 1n-15, the UE 1n-01 may be powered off or deregistered. That is, the UE may be powered off or deregistered from the 5G network.

At step 1n-20, the UE 1n-01 may release the stored QoE measurement results and QoE configuration information in response to being powered off or deregistered. Alternatively, the UE 1n-01 may release the QoE configuration information and no longer perform QoE measurements in response to being powered off or deregistered. Here, if the base station does not retrieve the stored QoE measurement results even after 48 hours have elapsed since the UE 1n-01 released the QoE configuration information, the UE 1n-01 may release the QoE measurement results. Alternatively, if the base station has not retrieved the QoE measurement results stored in the UE even after 48 hours have elapsed from UE's power-off or deregistration, the UE 1n-01 may release the stored QoE measurement results and corresponding QoE configuration information. For reference, whether to release the QoE measurement results and corresponding QoE configuration information may be determined according to the indication from the base station at step 1n-10.

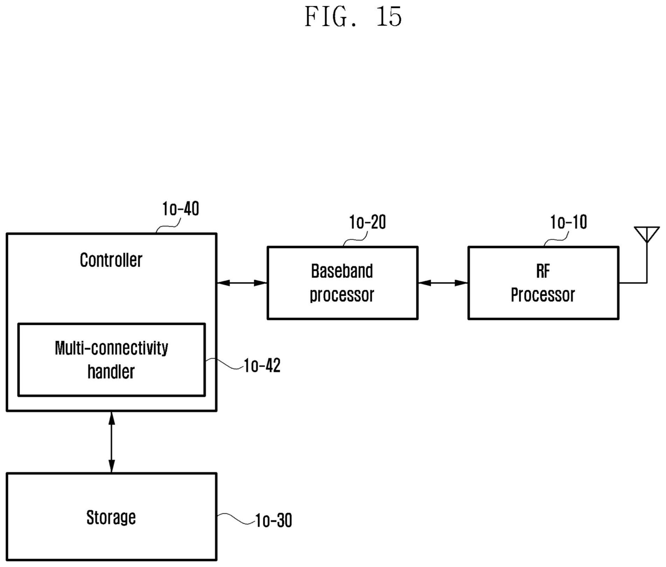

FIG. 15 is a block diagram illustrating the internal structure of a UE according to an embodiment of the disclosure.

With reference to FIG. 15, the UE according to an example of the disclosure includes a radio frequency (RF) processor 1o-10, a baseband processor 1o-20, a storage 1o-30, and a controller 1o-40.

The RF processor 1o-10 performs a function for transmitting and receiving a signal through a radio channel, such as signal band conversion and amplification. That is, the RF processor 1o-10 performs up-conversion of a baseband signal provided from the baseband processor 1o-20 into an RF-band signal and transmits it through an antenna, and performs down-conversion of an RF-band signal received through an antenna into a baseband signal. For example, the RF processor 1o-10 may include a transmission filter, a reception filter, an amplifier, a mixer, an oscillator, a digital-to-analog converter (DAC), and an analog-to-digital converter (ADC). Although only one antenna is illustrated in the drawing, the UE may be provided with a plurality of antennas. Also, the RF processor 1o-10 may include a plurality of RF chains. Further, the RF processor 1o-10 may perform beamforming. For beamforming, the RF processor 1o-10 may adjust phases and magnitudes of individual signals transmitted and received through the plural antennas or antenna elements. Further, the RF processor may perform MIMO, and may receive several layers during an MIMO operation.

The baseband processor 1o-20 performs conversion between a baseband signal and a bit stream in accordance with the physical layer specification of the system. For example, during data transmission, the baseband processor 1o-20 generates complex symbols by encoding and modulating a transmission bit stream. Further, during data reception, the baseband processor 1o-20 restores a reception bit stream by demodulating and decoding a baseband signal provided from the RF processor 1o-10. For example, in the case of utilizing orthogonal frequency division multiplexing (OFDM), for data transmission, the baseband processor 1o-20 generates complex symbols by encoding and modulating a transmission bit stream, maps the complex symbols to subcarriers, and composes OFDM symbols through inverse fast Fourier transform (IFFT) operation and cyclic prefix (CP) insertion. Further, for data reception, the baseband processor 1o-20 divides a baseband signal provided from the RF processor 1o-10 in units of OFDM symbols, restores the signals mapped to subcarriers through fast Fourier transform (FFT), and restores the reception bit stream through demodulation and decoding.

The baseband processor 1o-20 and the RF processor 1o-10 transmit and receive signals as described above. Hence, the baseband processor 1o-20 and the RF processor 1o-10 may be called a transmitter, a receiver, a transceiver, or a communication unit. Further, to support different radio access technologies, at least one of the baseband processor 1o-20 or the RF processor 1o-10 may include a plurality of communication modules. In addition, to process signals of different frequency bands, at least one of the baseband processor 1o-20 or the RF processor 1o-10 may include different communication modules. For example, the different radio access technologies may include a wireless LAN (e.g., IEEE 802.11), a cellular network (e.g., LTE), and the like. In addition, the different frequency bands may include a super high frequency (SHF) band (e.g., 2.NRHz, NRhz) and a millimeter wave (mmWave) band (e.g., 60 GHz).

The storage 1o-30 stores data such as basic programs, application programs, and configuration information for the operation of the UE. In particular, the storage 1o-30 may store information about a second access node that performs wireless communication using a second radio access technology. The storage 1o-30 provides stored data in response to a request from the controller 1o-40.

The controller 1o-40 controls the overall operation of the UE. For example, the controller 1o-40 transmits and receives signals through the baseband processor 1o-20 and the RF processor 1o-10. Further, the controller 1o-40 writes or reads data to or from the storage 1o-30. To this end, the controller 1o-40 may include at least one processor. For example, the controller 1o-40 may include a communication processor (CP) for controlling communication and an application processor (AP) for controlling higher layers such as application programs.

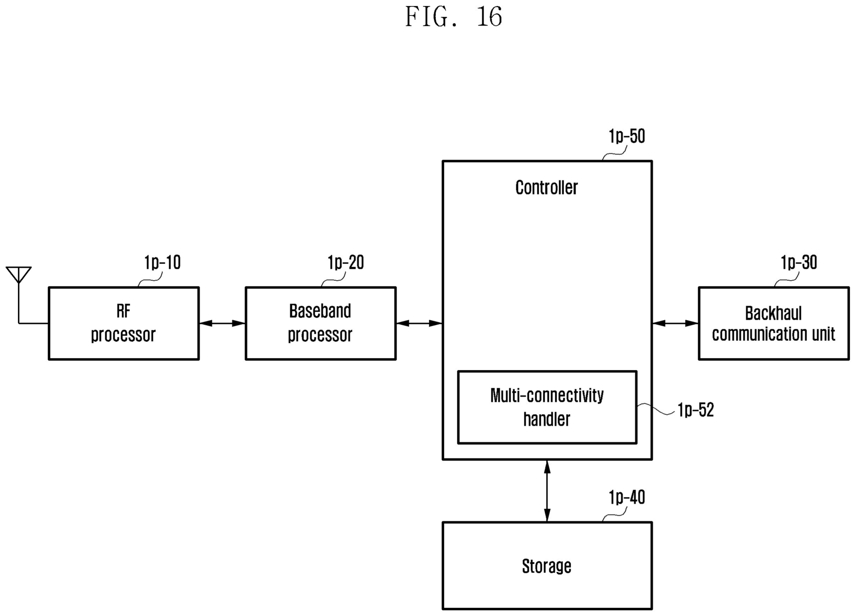

FIG. 16 is a block diagram illustrating the structure of an NR base station according to an embodiment of the disclosure.

With reference to FIG. 16, the base station according to an example of the disclosure includes an RF processor 1p-10, a baseband processor 1p-20, a backhaul communication unit 1p-30, a storage 1p-40, and a controller 1p-50.

The RF processor 1p-10 performs a function for transmitting and receiving a signal through a radio channel, such as signal band conversion and amplification. That is, the RF processor 1p-10 performs up-conversion of a baseband signal provided from the baseband processor 1p-20 into an RF-band signal and transmits the converted signal through an antenna, and performs down-conversion of an RF-band signal received through an antenna into a baseband signal. For example, the RF processor 1p-10 may include a transmission filter, a reception filter, an amplifier, a mixer, an oscillator, a DAC, and an ADC. Although only one antenna is illustrated in the drawing, the first access node may be provided with a plurality of antennas. Additionally, the RF processor 1p-10 may include a plurality of RF chains. Further, the RF processor 1p-10 may perform beamforming. For beamforming, the RF processor 1p-10 may adjust phases and amplitudes of individual signals transmitted and received through plural antennas or antenna elements. The RF processor may perform downlink MIMO operation by transmitting one or more layers.

The baseband processor 1p-20 performs conversion between a baseband signal and a bit stream in accordance with the physical layer specification of a first radio access technology. For example, for data transmission, the baseband processor 1p-20 generates complex symbols by encoding and modulating a transmission bit stream. Further, for data reception, the baseband processor 1p-20 restores a reception bit stream by demodulating and decoding a baseband signal provided from the RF processor 1p-10. For example, in the case of utilizing OFDM, for data transmission, the baseband processor 1p-20 generates complex symbols by encoding and modulating a transmission bit stream, maps the complex symbols to subcarriers, and composes OFDM symbols through IFFT operation and CP insertion. Further, for data reception, the baseband processor 1p-20 divides a baseband signal provided from the RF processor 1p-10 in units of OFDM symbols, restores the signals mapped to subcarriers through FFT operation, and restores the reception bit stream through demodulation and decoding. The baseband processor 1p-20 and the RF processor 1p-10 transmit and receive signals as described above. Hence, the baseband processor 1p-20 and the RF processor 1p-10 may be called a transmitter, a receiver, a transceiver, a communication unit, or a wireless communication unit.

The backhaul communication unit 1p-30 provides an interface for communication with other nodes in the network. That is, the backhaul communication unit 1p-30 converts a bit stream, which is to be transmitted from the primary base station to another node, for example, a secondary base station or the core network, into a physical signal, and converts a physical signal received from another node into a bit stream.

The storage 1p-40 stores data such as basic programs, application programs, and configuration information for the operation of the primary base station. In particular, the storage 1p-40 may store information on a bearer allocated to a connected UE and measurement results reported from the connected UE. Further, the storage 1p-40 may store information used as a criterion for determining whether to provide or suspend multi-connectivity to the UE. In addition, the storage 1p-40 provides stored data in response to a request from the controller 1p-50.

The controller 1p-50 controls the overall operation of the primary base station. For example, the controller 1p-50 transmits and receives signals through the baseband processor 1p-20 and the RF processor 1p-10 or through the backhaul communication unit 1p-30. Further, the controller 1p-50 writes or reads data to or from the storage 1p-40. To this end, the controller 1p-50 may include at least one processor.

Meanwhile, the detailed description of the disclosure has described as specific embodiments, but it is clear that various modifications are possible without departing from the scope of the disclosure. Therefore, the scope of the disclosure should not be limited to those embodiments described herein, but should be defined by the scope of the accompanying claims and their equivalents.

## Claims

1. A method performed by a terminal in a wireless communication system, the method comprising:
receiving, from a base station, a first radio resource control (RRC) message including configuration information for application layer measurement applied to an RRC idle state or RRC inactive state;
receiving a second RRC message indicating RRC connection release from the base station;
transitioning to the RRC idle state based on the second RRC message;
storing a report for quality-of-experience (QoE) measurement performed in the RRC idle state according to a QoE measurement configuration based on the configuration information; and
discarding information related to the QoE measurement based on a satisfaction of a preset condition,
wherein the preset condition includes a case where 48 hours have elapsed from the transition to the RRC idle state.

2. The method of claim 1, wherein the information related to the QoE measurement includes the QoE measurement configuration and the report for the QoE measurement.

3. The method of claim 1,
wherein the configuration information includes priority information indicating priority associated with the QoE measurement,
wherein the preset condition includes a case where a memory storing the report for the QoE measurement becomes full, and
wherein, in case that the memory becomes full, a report for the QoE measurement with a lowest priority is discarded first based on the priority information.

4. The method of claim 1, further comprising:
transmitting, to the base station, user equipment (UE) capability information indicating that the terminal supports the QoE measurement.

5. The method of claim 1, further comprising:
performing a procedure for RRC connection setup with the base station,
wherein a completion of the RRC connection setup with the base station is identified based on a transmission of an RRC connection setup complete message to the base station, and
wherein the RRC connection setup complete message includes indication information indicating whether the QoE measurement configuration has been stored.

6. The method of claim 1,
wherein the first RRC message includes service type information associated with a service for which the QoE measurement is performed, and
wherein the service includes a virtual reality (VR) service, a streaming service, or a multimedia telephony service over IMS (MTSI) service.

7. The method of claim 1,
wherein the QoE measurement is performed for a multicast/broadcast service (MBS) broadcast service, and
wherein configuration information for the MBS broadcast service is obtained from a system information block (SIB) transmitted from the base station.

8. A terminal in a wireless communication system, comprising:
a transceiver; and
a processor configured to:
receive, from a base station, a first radio resource control (RRC) message including configuration information for application layer measurement applied to an RRC idle state or RRC inactive state;
receive a second RRC message indicating RRC connection release from the base station;
transition to the RRC idle state based on the second RRC message;
store a report for quality-of-experience (QoE) measurement performed in the RRC idle state according to a QoE measurement configuration based on the configuration information; and
discard information related to the QoE measurement based on a satisfaction of a preset condition,
wherein the preset condition includes a case where 48 hours have elapsed from the transition to the RRC idle state.

9. The terminal of claim 8,
wherein the information related to the QoE measurement includes the QoE measurement configuration and the report for the QoE measurement.

10. The terminal of claim 8,
wherein the configuration information includes priority information indicating priority associated with the QoE measurement,
wherein the preset condition includes a case where a memory storing the report for the QoE measurement becomes full, and
wherein, in case that the memory becomes full, a report for QoE measurement reports with a lowest priority is discarded first based on the priority information.

11. The terminal of claim 8,
wherein the processor is further configured to transmit, to the base station, user equipment (UE) capability information indicating that the terminal supports the QoE measurement.

12. The terminal of claim 8,
wherein the processor is further configured to perform a procedure for RRC connection setup with the base station,
wherein a completion of the RRC connection setup with the base station is identified based on a transmission of an RRC connection setup complete message to the base station, and
wherein the RRC connection setup complete message includes indication information indicating whether the QoE measurement configuration has been stored.

13. The terminal of claim 8,
wherein the first RRC message includes service type information associated with a service for which the QoE measurement is performed, and
wherein the service includes a virtual reality (VR) service, a streaming service, or a multimedia telephony service over IMS (MTSI) service.

14. The terminal of claim 8,
wherein the QoE measurement is performed for a multicast/broadcast service (MBS) broadcast service, and
wherein configuration information for the MBS broadcast service is obtained from a system information block (SIB) transmitted from the base station.
